# EUROPEAN PATENT SPECIFICATION

(11) **EP 3 339 337 B1**
(45) Date of publication and mention of the grant of the patent: **07.04.2021**
(21) Application number: 16860222.5
(22) Date of filing: 27.10.2016
(51) Int. Cl.: C09D 4/00, C09D 4/06, C09D 5/00, C09D 127/12, G02F 1/1335, G02B 5/30, G02B 1/11, C08L 83/04, C08L 71/02, C08K 7/26

(54) **POLYMER FILM, AND OPTICAL MEMBER, POLARIZING MEMBER, AND DISPLAY DEVICE EMPLOYING SAME**
POLYMERFOLIE UND OPTISCHES ELEMENT, POLARISIERENDES ELEMENT UND ANZEIGEVORRICHTUNG DAMIT
FILM POLYMÈRE, ET ÉLÉMENT OPTIQUE, ÉLÉMENT POLARISANT, ET DISPOSITIF D'AFFICHAGE L'UTILISANT

(30) Priority: 27.10.2015 JP 2015210964; 21.09.2016 JP 2016184857
(43) Date of publication of application: 27.06.2018
(73) Proprietor: Samsung Electronics Co., Ltd., Suwon-si, Gyeonggi-do 16677 (KR)
(72) Inventor: KOBORI, Shigeto, Yokohama-shi Kanagawa 230-0027 (JP); KANDA, Tomomichi, Yokohama-shi Kanagawa 230-0027 (JP); SATO, Atsushi, Yokohama-shi Kanagawa 230-0027 (JP); LEE, Dae-hee, Hwaseong-si Gyeonggi-do 18456 (KR)
(74) Representative: Russell, Tim
(86) International application number: PCT/KR2016/012117
(87) International publication number: WO 2017/074039

(56) References cited:
- EP-A1- 3 163 336
- WO-A1-2006/098424
- JP-A- 2010 083 047
- JP-A- 2010 254 950
- JP-A- 2015 055 659
- JP-A- 2016 155 992
- KR-A- 20110 079 522
- KR-A- 20140 032 887
- KR-A- 20140 140 139
- KR-B1- 100 787 770
- US-A1- 2010 021 694
- US-A1- 2013 135 726

## Description

The present disclosure relates to an optical member such as a polarizing member, and a display device.

### Background Art

Optical members such as polarizing members may be mounted on a surface of a display member of a display device. For example, a polarization film may be mounted on the outermost surface of a display device having a liquid crystal panel. The surface of the polarization film may be, for example, formed of a triacetyl cellulose (TAC) film. However, since TAC is susceptible to scratches, a hard coat layer may be provided on the TAC to prevent scratches. Here, it is common to include metal oxide particles in the hard coat layer to inhibit scratch occurrence. Also, a conductive material may be added as metal oxide particles in order to prevent the polarization film from being charged.

In addition, it is preferable that the polarization film has an anti-reflection function that suppresses a phenomenon whereby an image of an indoor/outdoor object is reflected by a screen of the display device. In this regard, a low-refractive index layer for making a light irradiated from the outside difficult to be reflected may be mounted on a hard coat layer. Here, reflectance may be reduced by forming a concave-convex structure on the surface by using a binder composed of an incompatible resin in the low-refractive index layer. Also, an additive for imparting stain resistance and slipperiness to the low-refractive index layer may be added.

U.S. Patent Application Publication No. 2008/0158675 discloses a transparent film having at least a hard coat layer on a transparent support. The hard coat layer is prepared by using a coating composition including an ionizing-radiation-curable compound and at least one active halogen compound. The hard coat layer is a layer formed by coating and drying the coating composition on a transparent support, and then irradiating an ionizing radiation to cure the composition.

However, when an additive is used in the formation of the low-refractive index layer, the additive may deteriorate a cross-linking density between binders. Thus, film strength of the low-refractive index layer may easily deteriorate. Also, a conventional low-refractive index layer may not have sufficiently low reflectance.

EP 3163336 A1 describes an optical element including a substrate and a low refractive layer formed on the substrate, wherein the low refractive layer includes a resin layer including a first binder, hollow particles distributed in the first binder and a fluorine containing polymer immiscible with the hollow particles.

US 2013/135726 A1 describes an antistatic antireflection film, a method for manufacturing the film, a polarizing plate and an image display device.

KR 2014 0140139 A describes a coating composition for an anti-reflection and optical film.

The present invention is defined by the claims.

Provided are an optical member, a polarizing member and a display device comprising a polymer film (the low-refractive index layer) of which film strength is difficult to be degraded even when an additive is used.

Provided are an optical member and a display device comprising a polymer film having a lower reflectance.

In one aspect of the invention, there is provided an optical member comprising: a substrate; and
a low-refractive index layer formed on the substrate,
wherein the low-refractive index layer comprises;
a first binder containing a photopolymerized product of a mixture of
(A) one or both of a side-chain reactive-type photopolymerizable fluoropolymer and a photopolymerizable fluorine-containing monomer represented by Formula (8)

   Z¹-CF₂O-(CF₂CF₂O)_{d}-(CF₂O)ₑ-CF₂-Z² (8)

   ; and
(B) a siloxane compound represented by Formula (1): 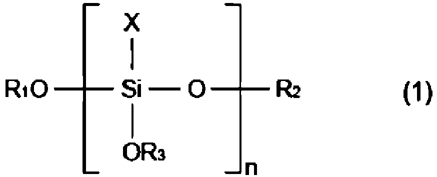
   wherein, in Formula (1), R₁ to R₃ are each independently a linear or branched C1-C10 alkyl group; X is at least one selected from a photoreactive group, an alkyl group, a phenyl group, an amino group, an isocyanate group, a vinyl group, a mercapto group, and a glycidoxy group and comprises at least one photoreactive group; and n is an integer of 1 to 20;
   and wherein in Formula (8), Z¹ and Z² are identical to or different from each other and are each independently an organic group having a urethane backbone and an acryloyl or methacryloyl group at a terminal; d is an integer of 0 or greater; and e is an integer of 1 or greater;
   hollow silica particles distributed in the first binder; and
   a photopolymerized product of a one-end reactive-type photopolymerizable fluoropolymer, and a modified silicone, which are mainly distributed in a surface side; and wherein the modified silicone is at least one selected from Formulae (3) to (5): 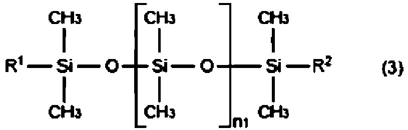 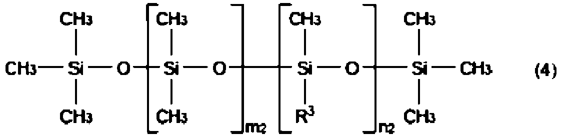 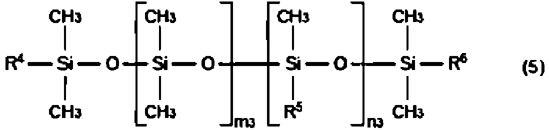 wherein, in Formulae (3) to (5), R¹ to R⁶ are each independently an organic group having one selected from an amino group, a hydroxyl group, an isocyanate group, a vinyl group, a mercapto group, a glycidoxy group, an acryloyl group, and a methacryloyl group, at a terminal; and m₂, m₃, n₁, n₂, and n₃ are each independently an integer of 1 or greater.

Also, pentaerythritol triacrylate represented by Formula (2) may be used in addition to the siloxane compound:

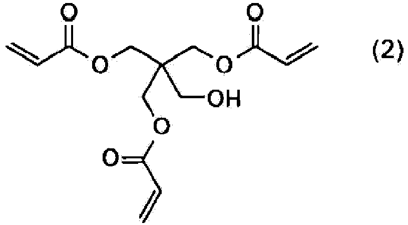

Also, in Formulae (4) and (5), n₂ and n₃ may be 6 or greater to 10 or less.

The side-chain reactive-type photopolymerizable fluoropolymer may be represented by Formulae (6) and (7):

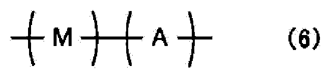

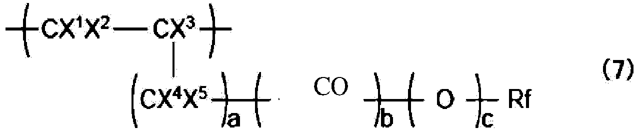

In Formula (6), structural unit M is a structural unit that is derived from a fluorine-containing ethylenic monomer represented by Formula (7). Structural unit A is a structural unit that is derived from a monomer copolymerizable with a fluorine-containing ethylenic monomer represented by Formula (7). When the total side-chain reactive-type photopolymerizable fluoropolymer is 100 mol%, an amount of M is in a range of 0.1 mol% to 100 mol%. Also, an amount of A is in a range of greater than 0 mol% to 99.9 mol% or less. A number average molecular weight of M is in a range of 30,000 to 1,000,000.

In Formula (7), X¹ is H or F, and X² is H or F. X³ is H, F, CH₃, or CF₃. X⁴ is H, F, or CF₃, and X⁵ is H, F, or CF₃. Rf is an organic group having 1 or greater to 3 or less Y¹ bonded to a fluorine-containing alkyl group. Y¹ is a monovalent organic group having a carbon number in a range of 2 to 10 and an ethylenic carbon-carbon double bond at a terminal. The fluorine-containing alkyl group has a fluorine-containing alkyl group having a carbon number in a range of 1 to 40 or an ether bond having a carbon number in a range of 2 to 100. Also, a is 0, 1, 2, or 3; b is 0 or 1; and c is 0 or 1. A fluorine-containing ratio in the side-chain reactive-type photopolymerizable fluoropolymer may be generally less than 50%.

Also, a photopolymerizable fluorine-containing monomer represented by Formula (8) may be used instead of or in addition to the side-chain reactive-type photopolymerizable fluoropolymer:

Z¹-CF₂O-(CF₂CF₂O)_{d}-(CF₂O)ₑ-CF₂-Z² (8)

In Formula (8), Z¹ and Z² may be identical to or different from each other and are each independently an organic group having a urethane backbone and an acryloyl group or a methacryloyl group at a terminal. Also, d is an integer of 0 or greater; and e is an integer of 1 or greater.

The one-end reactive-type photopolymerizable fluoropolymer may be represented by Formula (9):

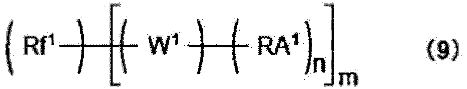

In Formula (9), Rf¹ denotes a (per)fluoroalkyl group or a (per)fluoropolyether group. W¹ denotes a linking group; RA¹ denotes a functional group having a polymeric unsaturated group. n is 1, 2, or 3; and m is 1, 2, or 3. A fluorine-containing ratio in the one-end reactive-type photopolymerizable fluoropolymer may be generally 52% or greater.

Also, the one-end reactive-type photopolymerizable fluoropolymer may be represented by Formula (10) or (11):

Rf²-(OD¹)ᵣ-O(D²)_{q}-O-(CF₂)-RA² (10)

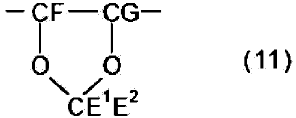

In Formula (10), Rf² is a (per)fluoroalkyl group or a (per)fluoropolyether group. RA² is a reaction site at which polymerization occurs. D¹ is CF2-CF2. D² is a compound having a cyclic structure represented by Formula (11). r and q are each independently an integer of 1 or greater. In Formula (11), E¹ is F or CF₂; and E² is F or CF₂. G is F or a perfluoroalkyl group having a carbon number in a range of 1 to 5. Here, RA² may be represented by Formula (12):

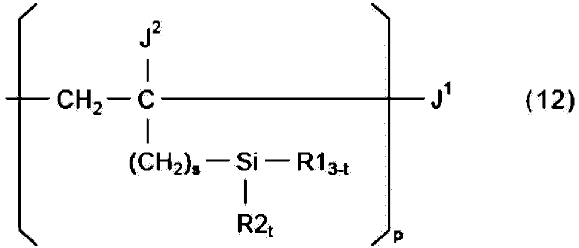

In Formula (12), J¹ is H. J² is H or a low alkyl group having a carbon number in a range of 1 to 3. R1 is a hydrolytic group, and R2 is an acryloyl group or a methacryloyl group. Also, s and p are each independently an integer of 1 or greater, and t is 1 or 2.

Here, the hollow silica particles may have a plurality of maximum values in a frequency curve of particle diameters representing particle size distribution of the hollow silica particles. Also, the hollow silica particles may have a photopolymerizable functional group and a hydroxyl group on a surface. The hollow silica particles may have a median particle diameter in a range of 10 nm to 100 nm. Also, a refractive index of the hollow silica particles themselves may be in a range of 1.10 to 1.40.

An average surface roughness (Ra) of a surface of the polymer film may be in a range of 10 nm to 20 nm. A luminous reflectance of a surface of the polymer film may be 0.3% or less.

The optical member according to another aspect of an embodiment may have a hard coat layer between the substrate and the low-refractive index layer. The hard coat layer includes a second binder and metal oxide particles. The second binder is a photopolymerized product of a monomer having a photopolymerizable functional group. The metal oxide particles are distributed in the second binder.

The monomer having a photopolymerizable functional group may include a first monomer. The first monomer may be represented by Formula (13).

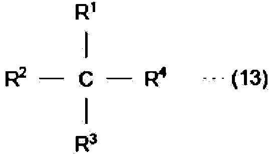

In Formula (13), R¹ to R⁴ each independently denote a photopolymerizable functional group not including a hydroxyl group.

The monomer having a photopolymerizable functional group may include a second monomer. The second monomer may be represented by Formula (14).

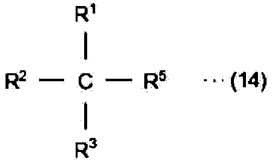

In Formula (14), R¹ to R³ each independently denote a photopolymerizable functional group not including a hydroxyl group. R⁵ denotes a functional group having a hydroxyl group at a terminal.

The second binder may include a multi-branched monomer having a photopolymerizable functional group; a multi-branched oligomer having a photopolymerizable functional group; a combination thereof; and a photopolymerized product of the monomer having a photopolymerizable functional group. The multi-branched monomer having a photopolymerizable functional group may couple with the photopolymerizable functional group at a branch point of a second or higher generation.

The second binder may be a photopolymerized product of a mixture of the first monomer and the second monomer at a weight ratio in a range of 99:1 to 90:10.

The metal oxide particles may be a tin oxide having a conductive material added thereto. Distribution of the metal oxide particles may be localized in a substrate side in the second binder.

The substrate may be a transparent substrate having a total light transmittance of 85% or greater. The substrate may be formed of triacetyl cellulose (TAC).

In order to achieve one objective and/or another objective, according to another aspect of an embodiment, a polarizing member includes a polarizing means polarizing light; and a low-refractive index layer formed on the polarizing means, wherein the low-refractive index layer includes a first binder as defined in claim 1; hollow silica particles distributed in the first binder; and a photopolymerized product of a one-end reactive-type photopolymerizable fluoropolymer and a modified silicone as defined in claim i,that are mainly distributed in a surface side,
wherein a hard coat layer including a second binder prepared by photopolymerizing a monomer having a photopolymerizable functional group and metal oxide particles is distributed in the second binder, between the polarizing means and the low-refractive index layer.

In order to achieve one objective and/or another objective, according to another aspect of an embodiment, a display device includes a display means displaying an image; and a low-refractive index layer formed on a surface of the display means, wherein the low-refractive index layer includes a first binder as defined in claim 1; hollow silica particles distributed in the first binder; and a photopolymerized product of a one-end reactive-type photopolymerizable fluoropolymer and a modified silicone as defined in claim 1, that are mainly distributed in a surface side, wherein the display device includes a hard coat layer including a second binder prepared by photopolymerizing a monomer having a first binder, hollow silica particles, and a photopolymerized product of a one-end reactive-type photopolymerizable fluoropolymer, and a modified silicone. The first binder includes a photopolymerized product of a side-chain reactive-type photopolymerizable fluoropolymer and a siloxane compound. The hollow silica particles are distributed in the first binder. Also, the photopolymerized product of a one-end reactive-type photopolymerizable fluoropolymer and the modified silicone are mainly distributed in a surface side.

The polarizing member according to another aspect of an embodiment may include a hard coat layer including a second binder prepared by photopolymerizing a monomer having a photopolymerizable functional group and metal oxide particles distributed in the second binder, between the polarizing means and the low-refractive index layer.

In order to achieve one objective and/or another objective, according to another aspect of an embodiment, a display device includes a display means displaying an image; and a low-refractive index layer formed on a surface of the display means, wherein the low-refractive index layer includes a first binder containing a photopolymerized product of a side-chain reactive-type photopolymerizable fluoropolymer and a siloxane compound; hollow silica particles distributed in the first binder; and a photopolymerized product of a one-end reactive-type photopolymerizable fluoropolymer and a modified silicone that are mainly distributed in a surface side. That is, the display device according to another aspect of an embodiment includes a display means displaying an image; and a low-refractive index layer formed on a surface of the display means. Here, the low-refractive index layer includes a first binder, hollow silica particles, a photopolymerized product of a one-end reactive-type photopolymerizable fluoropolymer, and a modified silicone. The first binder includes a photopolymerized product of a side-chain reactive-type photopolymerizable fluoropolymer and a siloxane compound. The hollow silica particles are distributed in the first binder. Also, the photopolymerized product of a one-end reactive-type photopolymerizable fluoropolymer and the modified silicone are mainly distributed in a surface side. The display device according to another aspect of an embodiment includes a hard coat layer including a second binder prepared by photopolymerizing a monomer having a photopolymerizable functional group and metal oxide particles distributed in the second binder, between the display means and the low-refractive index layer.

In the display device according to another aspect of an embodiment, the display means may be a liquid crystal panel, an organic light emitting diode (OLED), or a Braun tube.

In order to achieve one objective and/or another objective, according to another aspect of an embodiment, a method of forming a low-refractive index layer includes preparing a coating solution to prepare a coating solution, as a coating solution for forming a low-refractive index layer, including main components including hollow silica particles, a side-chain reactive-type photopolymerizable fluoropolymer, a siloxane compound, and modified silicone, a one-end reactive-type photopolymerizable fluoropolymer as an additive, and a solvent that disperses and/or dissolves the main components and the one-end reactive-type photopolymerizable fluoropolymer; coating the coating solution; and curing the coated coating solution including photopolymerizing the side-chain reactive-type photopolymerizable fluoropolymer to prepare a low-refractive index layer. That is, the method of forming a low-refractive index layer according to another aspect of an embodiment includes preparing a coating solution, coating, and curing process. In the preparing of a coating solution, a coating solution for forming a low-refractive index layer is prepared. In the coating process, the coating solution is coated. The curing process includes photopolymerizing the side-chain reactive-type photopolymerizable fluoropolymer. In the curing process, the coated coating solution is cured to prepare a low-refractive index layer.

The coating solution for forming a low-refractive index layer used in the method of forming a low-refractive index layer according to another aspect of an embodiment includes main components, a one-end reactive-type photopolymerizable fluoropolymer, and a solvent. The main components include hollow silica particles, a side-chain reactive-type photopolymerizable fluoropolymer, a siloxane compound, and modified silicone. The one-end reactive-type photopolymerizable fluoropolymer is an additive. Also, the solvent disperses and/or dissolves the main components and the one-end reactive-type photopolymerizable fluoropolymer. Here, a boiling point of the solvent may be 90°C or lower. Also, after the coating of the coating solution, the coated coating solution may be dried.

According to an embodiment, provided are a polymer film of which film strength is difficult to be degraded even when an additive is used; and an optical member, a polarizing member, and a display device each employing the polymer film.

According to another embodiment, provided are a polymer film including a low-refractive index layer having a lower reflectance; and an optical member, a polarizing member, and a display device each employing the polymer film

### Description of Drawings

FIG. 1A is a view illustrating a display device to which an embodiment applies;
FIG. 1B is a cross-sectional view along line Ib-Ib of FIG. 1A;
FIG. 1C is an enlarged view of FIG. 1B and shows the outermost portion of a display screen;
FIGS. 2A to 2C are cross-sectional views illustrating structures of a hard coat layer according to an embodiment;
FIG. 3 is a cross-sectional view further illustrating a low-refractive index layer;
FIG. 4 shows a particle size distribution curve of hollow silica particles, according to an embodiment;
FIG. 5 is a schematic view illustrating a structure of a multi-branched monomer having a photopolymerizable functional group;
FIG. 6 is a flowchart illustrating a method of forming a hard coat layer, according to an embodiment;
FIG. 7 is a flowchart illustrating a method of forming a low-refractive index layer, according to an embodiment;
FIGS. 8A and 8B are conceptual views illustrating differences between fluoropolymer layers of a low-refractive index layer including and not including modified silicone;
FIG. 9 is a comprehensive view of evaluation results of Examples and Comparative Examples, according to an embodiment;
FIG. 10 is a schematic cross-sectional view illustrating a pencil hardness measuring device that measures a pencil hardness;
FIG. 11 is a comprehensive view of evaluation results of Examples and Comparative Examples, according to another embodiment;
FIG. 12 is a view comparing relationships between a wavelength and a reflectance in cases when a multi-branched monomer is contained so that a maximum concave-convex difference is less than 0.2% and when a multi-branched monomer is not contained;
FIG. 13 is a view illustrating Examples and Comparative Examples, according to another embodiment;
FIG. 14 is a view illustrating Examples and Comparative Examples, according to another embodiment; and
FIG. 15 is a view illustrating evaluation results of polarization films prepared in Examples and Comparative Examples, according to an embodiment.

Hereinafter, an embodiment will be described more fully. Also, the present disclosure is not limited to embodiments set forth herein. Also, the present disclosure may be embodied in many different forms within the scope of the claims. Also, the accompanying drawings are provided for better understanding of the embodiment, and sizes in the drawings may not be the actual sizes.

### <Description of display device>

Hereinafter, an embodiment will be described more fully. Also, the present disclosure is not limited to the embodiment. Also, the present disclosure may be embodied in many different forms within the scope of the claims. Further, the accompanying drawings are provided for better understanding of the embodiment, and thus sizes in the drawings may not be the actual sizes.

### <Description of display device>

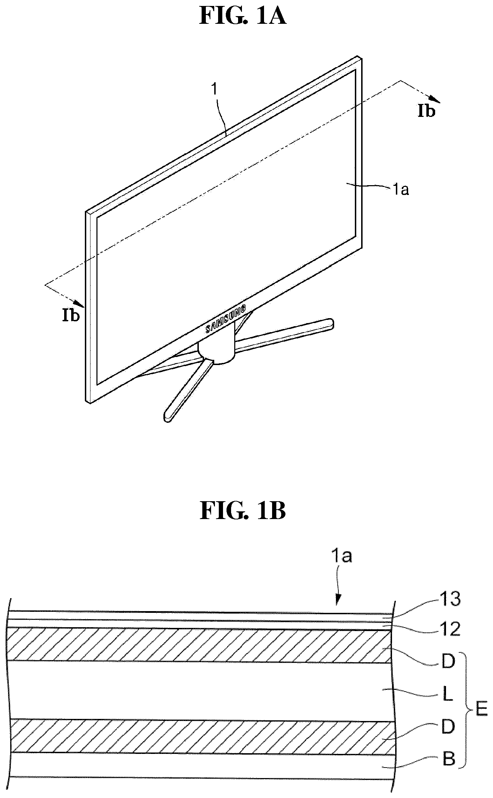

FIG. 1A is a view illustrating a display device 1 to which an embodiment applies. The display device 1 is a liquid crystal display (LCD) television. The display device 1 may be, for example a liquid crystal display for a personal computer (PC). The display device 1 may display an image on a display screen 1a.

### <Description of liquid crystal panel>

FIG. 1B is a cross-sectional view along a Ib-Ib line and shows an example of a composition of the display screen 1a to which an embodiment is applied.

The display screen 1a includes a liquid crystal panel E, which is an example of a display means, a hard coat layer 12 formed on a surface of the liquid crystal panel E, and a low-refractive index layer (a polymer film) 13. As shown in FIG. 1B, the liquid crystal panel E includes liquid crystal L, a polarization film D that is disposed to insert the liquid crystal L therein, and a backlight B disposed further under the polarization film D of a lower part.

The polarization films D of an upper part and the lower part are examples of the polarizing means that polarize light, and polarizing directions of the polarization films D cross each other at a right angle. For example, the polarization films D include a polymer film including a iodine compound molecules in polyvinyl alcohol (PVA). Also, the polymer film is sandwiched and laminated with a polymer film formed of triacetylcellulose (TAC) to form the polarization films D. When the iodine compound molecule is included, light is polarized. Also, the backlight B may be, for example, a cold cathode fluorescent lamp or a white light emitting diode (LED).

A power source not shown in the drawing is connected to the liquid crystal L, and when a voltage is applied from the power source, a direction of arrangement of the liquid crystal L changes. When light is irradiated from the backlight B, the light first passing the polarization film D of the lower part polarizes. When the liquid crystal panel E is a TN-type liquid crystal panel, the polarized light passes as it is when a voltage is applied to the liquid crystal panel E. Also, the polarization film D of the upper part having a different polarizing direction blocks the polarized light. A polarizing direction of the polarized light is set to rotate 90 degrees by the action of the liquid crystal L when a voltage is not applied to the liquid crystal panel E. Thus, the polarization film D of the upper part does not block but passes the polarized light. Accordingly, light permeation may be controlled by whether applying or not applying a voltage to the liquid crystal L, and thus an image may be displayed. Also, although not shown in the drawing, a color image may be displayed by using a color filter. Here, the polarization film D having the hard coat layer 12 and the low-refractive index layer 13 is an example of a polarizing member.

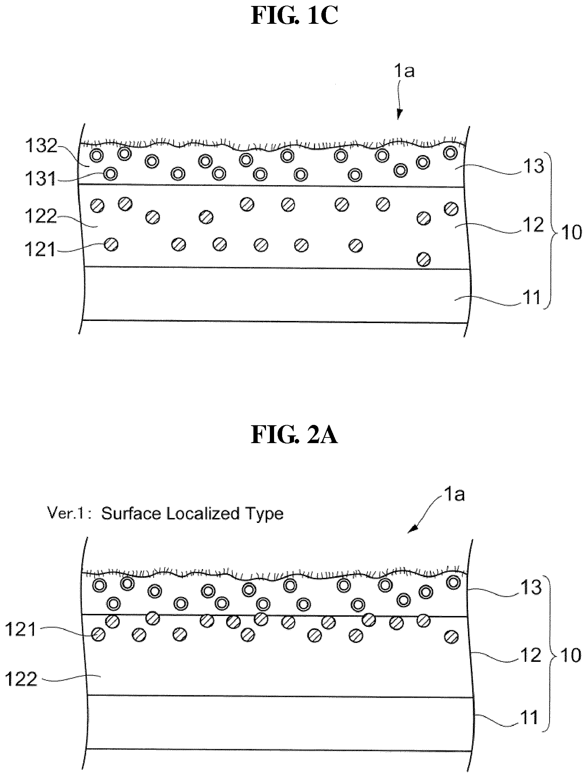

FIG. 1C is an enlarged view of FIG. 1B and shows the outermost part of the display screen 1a.

In FIG. 1C, a substrate 11, a hard coat layer 12, and a low-refractive index layer 13 are shown. The substrate 11 is the outermost layer of the polarization film D. Also, the substrate 11, the hard coat layer 12, and the low-refractive index layer 13 as a whole may be used as a protection layer 10. When the substrate 11, the hard coat layer 12, and the low-refractive index layer 13 as a whole are used as the protection layer 10, the protection layer 10 may protect the polarization film D. Also, in this case, the protection layer 10 is an example of the optical member according to an embodiment.

The substrate 11 may be a transparent substrate having a total light transmittance of 85% or greater. For example, triacetyl cellulose (TAC) may be used to form the substrate 11. Also, embodiments are not limited thereto, and polyethylene terephthalate (PET) may be used to form the substrate 11. However, in the present embodiment, TAC may be appropriate to be used. The substrate 11 may have a thickness, for example, in a range of 20 µm to 200 µm.

The hard coat layer 12 is a function layer that makes it difficult to occur scratches on the substrate 11. The hard coat layer 12 has a structure containing metal oxide particles 121 in a binder 122 (a second binder) as a base material, which has a resin as a main component. For example, the metal oxide particles 121 are fine particles having a median diameter in a range of 1 nm to 15 nm. Also, when the metal oxide particles 121 are included, a hard coat property may be given to the hard coat layer 12. In the present embodiment, for example, a tin oxide, a titanium oxide, or a cerium oxide may be used to form the metal oxide particles 121.

Also, the hard coat layer 12 may further have an anti-static function. When the hard coat layer 12 has an anti-static function, dust in the air may not be attached or stain (dirtiness) may not occur on the display device 1 when it is used. Also, when the hard coat layer 12 is formed on the substrate 11, dust in the air may not be attached thereon. Accordingly, when the hard coat layer 12 is formed, the protection layer 10 and further the display device 1 may be easily formed, and production yields thereof may easily improve.

In this regard, in the hard coat layer 12 of the present embodiment, a conductive material is added to the metal oxide particles 121. Here, the conductive material may be, for example, a metal element. In particular, the conductive material may be, for example, antimony (Sb) or phosphorus (P). Also, the conductive material may not be limited to one type but may include at least two types. Therefore, a surface resistance value of the hard coat layer 12 may decrease, and an anti-static function may be given to the hard coat layer 12.

As the metal oxide particles 121 added with a conductive material according to an embodiment, a tin oxide added with antimony (Sb) may be appropriately used. This is also referred to as an antimony-doped tin oxide or an antimony tin oxide (ATO). For example, the hard coat layer 12 according to an embodiment may have a thickness in a range of 1 µm to 10 µm.

For example, a weight ratio of the binder 122 and the metal oxide particles 121 may be preferable in a range of 5 wt%:95 wt% to 30 wt%:70 wt%.

FIGS. 2A to 2C are cross-sectional views illustrating structures of the hard coat layer 12 according to an embodiment.

The hard coat layer 12 according to an embodiment may be one of three types shown in FIGS. 2A to 2C, respectively.

In FIG. 2A, the type represented by "Ver. 1" is a case when distribution of the metal oxide particles 121 is localized in a surface side (a side of the low-refractive index layer 13). That is, the metal oxide particles 121 are more present toward the surface side and are almost not present in a side of the substrate 11. In FIG. 2A, this is shown as "a surface localized type". That is, the metal oxide particles 121 are more present in the surface side than the side of the substrate 11 in the hard coat layer 12. Whereas, the binder 122, which is another main component of the hard coat layer 12, is more present in the side of the substrate 11 than the surface side in the hard coat layer 12. In this type, the following effects may be produced due to the metal oxide particles 121 more localized in the surface side in the binder 122. First, a surface area increases as a concave-convex surface is formed due to the metal oxide particles 121 at an interface with the low-refractive index layer 13 of the hard coat layer 12. Thus, a binding strength with the low-refractive index layer 13 may improve. Also, since the metal oxide particles 121 are more localized in the surface side, a hardness of the interface with the low-refractive index layer 13 of the hard coat layer 12 may improve. In this regard, the hard coat layer 12 as a whole improves a hardness, and thus the hard coat layer 12 may be excellent. Also, when the metal oxide particles 121 are added as a conductive material, a surface resistance value decreases. That is, an anti-static effect increases. Also, a refractive index of the hard coat layer 12 improves, and a refractive index difference with the low-refractive index layer 13 having a low refractive index may increase. Therefore, the effect of suppressing reflection of external light in the low-refractive index layer 13 may improve. Also, in the liquid crystal panel E, a transparent electrode formed of an indium tin oxide (ITO) may be disposed. Thus, an effect of making the electrode pattern difficult to be seen by a user may occur.

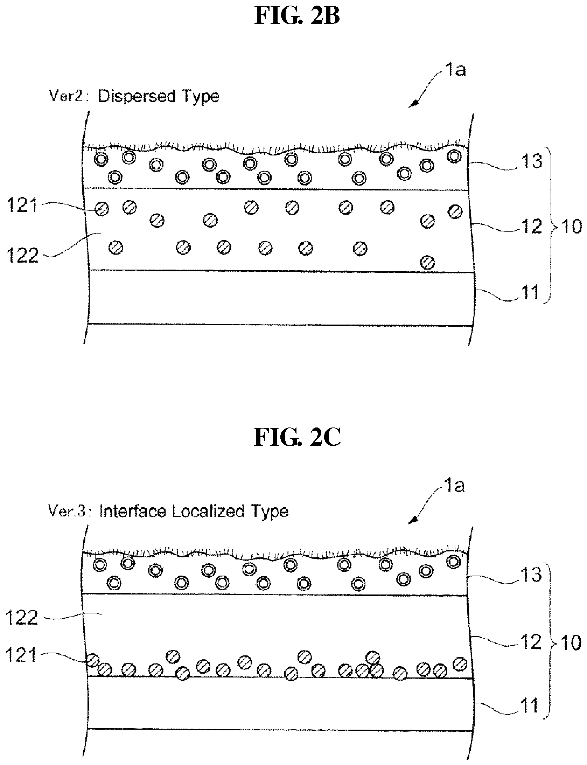

In FIG. 2B, the type represented by "Ver. 2" is a case when the metal oxide particles 121 are evenly distributed in the hard coat layer 12. This is, the case when there are few parts where the metal oxide particles 121 are localized in a thickness direction of the hard coat layer 12. In FIG. 2B, this is shown as "a dispersed type". That is, the metal oxide particles 121 are neither localized in the surface side nor in the substrate 11 side in the hard coat layer 12. In other words, the distribution of the metal oxide particles 121 is not localized in a vertical direction of FIG. 2B. In this type, the metal oxide particles 121 are evenly distributed in the hard coat layer 12. Thus, a shrinkage difference in the formation of the binder 122 by curing a monomer, as will be described, may not occur in a vertical direction. Also, the hard coat layer 12 may have both hardness and flexibility.

In FIG. 2C, the type represented by "Ver. 3" is a case when distribution of the metal oxide particles 121 is localized in a side of the substrate 11. That is, the metal oxide particles 121 are more portioned toward the side of the substrate 11 in a thickness direction and are almost not present in a surface side. In FIG. 2C, this is shown as "an interface localized type". That is, the metal oxide particles 121 are more present toward the side of the substrate 11 and are almost not present in the surface side (a side of the low-refractive index layer 13). Whereas, the binder 122, which is another main component of the hard coat layer 12, is more present in the surface side than the side of the substrate 11 in the hard coat layer 12. In this type, the following effects may be produced due to the metal oxide particles 121 more localized in the surface of the substrate 11. First, since the binder 122 is more present in the surface side, a recoating property (reactivity) between the binder 12 and the low-refractive index layer 13 improves. When the metal oxide particles 121 are more localized in the side of the substrate 11, a hardness at an interface with the substrate 11 of the hard coat layer 12 may improve. In this regard, the hard coat layer 12 as a whole may become the hard coat layer 12 having an improved hardness. Also, when a conductive material is added as the metal oxide particles 121, a surface resistance value decreases. That is, an anti-static effect increases.

The low-refractive index layer 13 is a function layer that suppresses reflection when the external light is irradiated. Hereinafter, a structure of the low-refractive index layer 13 will be described.

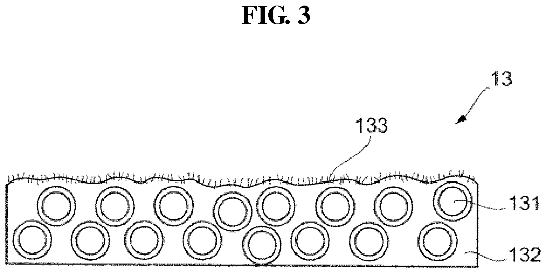

FIG. 3 is a view illustrating the low-refractive index layer 13 in detail.

The low-refractive index layer 13 has a structure in which hollow silica particles 131 are distributed in a binder 132 (a first binder) having a resin as a main component. Also, the low-refractive index layer 13 has a fluoropolymer layer 133 in a surface side (an upper part in the drawing). The low-refractive index layer 13 may have a low refractive index by containing the hollow silica particles 131 and thus may have a function of suppressing reflection of the external light. A refractive index of the low-refractive index layer 13 may be, for example, 1.50 or less. The low-refractive index layer 13 according to an embodiment may have a thickness, for example, in a range of 100 nm to 150 nm.

The hollow silica particles 131 may have an outer layer, and an interior of the outer layer may be a hollow or porous body. The outer layer and the porous body may be mainly formed of silicon oxide (SiO₂). Also, a plurality of photopolymerizable functional groups and hydroxyl groups are bonded on a surface side of the outer layer. The photopolymerizable functional groups and the outer layer are bonded with at least one bond of a Si-O-Si bond and a hydrogen bond in the middle. The photopolymerizable functional group may be an acryloyl group or a methacryloyl group. That is, the hollow silica particles 131 may include at least one selected from an acryloyl group and a methacryloyl group as a photopolymerizable functional group. The photopolymerizable functional group is also referred to as an ionizing radiation curing group. The hollow silica particles 131 may at least have a photopolymerizable functional group, and the number and a type of these functional groups are not particularly limited.

A median particle diameter (d50) of the hollow silica particles 131 may be in a range of 10 nm to 120 nm. Also, for example, the median particle diameter (d50) may be in a range of 40 nm to 75 nm. When the median particle diameter (d50) is less than 10 nm, an effect of lowering a refractive index of the low-refractive index layer 13 may be difficult to occur. Also, the median particle diameter is greater than 120 nm, transparency of the low-refractive index layer may deteriorated.

The median particle diameter of the hollow silica particles 131 is a median value of particle diameters of the hollow silica particles 131. The particle diameters are diameters when the hollow silica particles 131 are assumed as spheres. The particle diameter of the hollow silica particles 131 may be measured by, for example, a laser diffraction/scattering particle size distribution meter. The laser diffraction/scattering particle size distribution meter may be LA-920 available from Horiba Co., Ltd.. However, the particle size distribution meter is not limited thereto. Also, a refractive index of the hollow silica particles 131 themselves changes according to a refractive index required for the low-refractive index layer 13. The refractive index of the hollow silica particles 131 themselves may be, for example, in a range of 1.10 to 1.40, or, more particularly, 1.15 to 1.25. A refractive index of the hollow silica particles 131 themselves may be measured by, for example, a simulation software. The simulation software may be TracePro available from Lambda Research Optics, Inc..

Also, the hollow silica particles 131 may have a plurality of maximum values in a frequency curve (a particle size distribution curve) with respect to the particle size showing the particle size distribution of the hollow silica particles 131. That is, the hollow silica particles 131 may be formed of a plurality of particles having different particle size distribution.

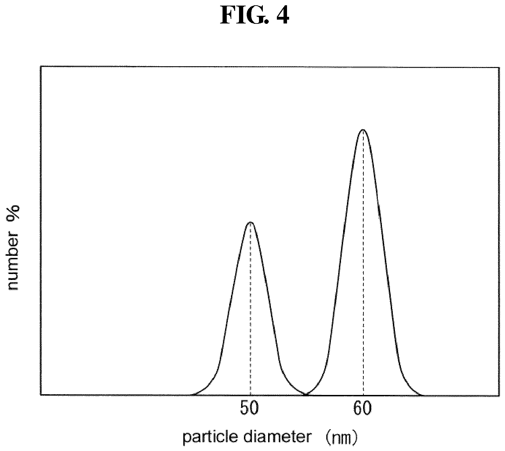

FIG. 4 is a view showing a particle size distribution curve of the hollow silica particles 131 according to an embodiment. In FIG. 4, a horizontal axis represents the particle diameters of the hollow silica particles 131, and a vertical axis represents the frequency distribution corresponding to the particle diameters in terms of the number%. As shown in the drawing, the hollow silica particles 131 have two maximum values where a median particle diameter is 50 nm and where a median particle diameter is 60 nm. This may be achieved by mixing hollow silica particles having a median particle diameter of 50 nm and hollow silica particles having a median particle diameter of 60 nm. In this regard, a surface area of the hollow silica particles 131 may increase by mixing hollow silica particles 131 having different median particle diameters. Therefore, film strength of the low-refractive index layer 13 may improve.

When the total of amounts of the hollow silica particles 131 and the binder 132 is 100 wt%, an amount of the hollow silica particles 131 may be in a range of 40 wt% to 70 wt%. When the amount of the hollow silica particles 131 is controlled to be within this range, a concave-convex structure may be formed on a surface of the low-refractive index layer 13. This concave-convex structure may have an average surface roughness (Ra) in a range of 10 nm to 20 nm. The hollow silica particles 131 lowers a refractive index of the low-refractive index layer 13. In this regard, when the amount is less than 40 wt%, a refractive index of the low-refractive index layer 13 may not sufficiently decrease. A more preferable amount may be in a range of 50 wt% to 65 wt%.

Further, the median particle diameter of the hollow silica particles is not limited thereto. For example, hollow silica particles having a median particle diameter of 75 nm are prepared. Also, hollow silica particles having a median particle diameter of 50 nm or hollow silica particles having a median particle diameter of 60 nm may be used in combination. Also, hollow silica particles having median particle diameters of 50 nm, 60 nm, and 75 nm may all be combined. An example of the hollow silica particles having a median particle diameter of 50 nm may be SURURIA 2320 available from Nikki Catalysts & Chemicals Industries Co., Ltd.. Also, an example of the hollow silica particles having a median particle diameter of 60 nm may be SURURIA 4320 available from Nikki Catalysts & Chemicals Industries Co., Ltd.. Also, an example of the hollow silica particles having a median particle diameter of 75 nm may be SURURIA 5320 available from Nikki Catalysts & Chemicals Industries Co., Ltd..

The binder 132 has a network structure which connects the hollow silica particles 131. The binder 132 includes a photocurable fluorine-containing resin. The photocurable fluorine-containing resin is a photopolymerized product of the side-chain reactive-type photopolymerizable fluoropolymer represented by Formulae (6) and (7). This polymer includes M at an amount in a range of 0.1 mol% to 100 mol% when the total amount of the side-chain reactive-type photopolymerizable fluoropolymer is 100 mol%. Also, the polymer includes A at an amount in a range of greater than 0 mol% to 99.9 mol% or less. A number average molecular weight of the polymer is in a range of 30,000 to 1,000,000.

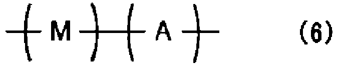

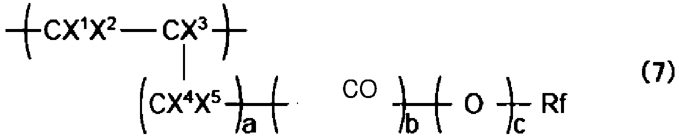

In Formula (6), structural unit M is a structural unit that is derived from a fluorine-containing ethylenic monomer represented by Formula (7). Also, structural unit A is a structural unit that is derived from a monomer copolymerizable with a fluorine-containing ethylenic monomer represented by Formula (7).

In Formula (7), X¹ is H or F; and X² is H or F. Also, X³ is H, F, CH₃, or CF₃. X⁴ is H, F, or CF₃; and X⁵ is H, F, or CF₃. Rf is an organic group having 1 or greater to 3 or less of Y¹ bonded to a fluorine-containing alkyl group. Also, Y¹ is a monovalent organic group having a carbon number in a range of 2 to 10 and an ethylenic carbon-carbon double bond at a terminal. The fluorine-containing alkyl group has a fluorine-containing alkyl group having a carbon number in a range of 1 to 40 or an ether bond having a carbon number in a range of 2 to 100. Also, a is 0, 1, 2, or 3; and b and c are each independently 0 or 1. An example of the side-chain reactive-type photopolymerizable fluoropolymer represented by Formulae (6) and (7) may be OPTOOL AR-110 available from Daikin Engineering Corporation.

Also, a photopolymerizable fluorine-containing monomer represented by Formula (8) may be instead of or in addition to the side-chain reactive-type photopolymerizable fluoropolymer. Also, the photopolymerizable fluorine-containing monomer represented by Formula (8) may be understood as a photopolymerizable fluorine oligomer.

Z¹-CF₂O-(CF₂CF₂O)_{d}-(CF₂O)ₑ-CF₂-Z² (8)

In Formula (8), Z¹ and Z² are identical to or different from each other and are each independently an organic group having a urethane backbone and an acryloyl group or a methacryloyl group at a terminal. Also, d is an integer of 0 or greater; and e is an integer of 1 or greater.

That is, a main chain of the photopolymerizable fluorine-containing monomer of Formula (8) is perfluoropolyether. Also, both terminals of the main chain are linked to organic groups Z¹ and Z² having a urethane backbone. Further, terminals of the organic groups Z¹ and Z² may be a photopolymerizable functional group such as an acryloyl group or a methacryloyl group.

Here, the urethane backbone is represented by -O-C(=O)-N(H)-. Also, when the main chain is branched at the organic groups Z¹ and Z², the terminal of the main chain as well as a terminal of the branched part may have an acryloyl group or a methacryloyl group.

Formula (8-1) is an example of a case when the organic groups Z¹ and Z² in the photopolymerizable fluorine-containing monomer represented by Formula (8) do not have a branched part. In Formula (8-1), a thick line denotes a urethane backbone, and a terminal is a methacryloyl group.

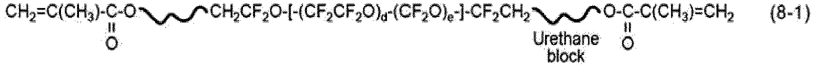

Formula (8-2) is an example of a case when the organic groups Z¹ and Z² in the photopolymerizable fluorine-containing monomer represented by Formula (8) do not have a branched part. In Formula (8-2), a thick line denotes a urethane backbone, and a terminal of the main chain as well as a terminal of the branched part is an acryloyl group.

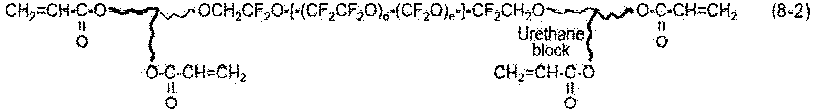

When the photopolymerizable fluorine-containing monomer is represented by Formula (8), a weight average molecular weight (Mw) may be in a range of 600 to 5000.

Formula (8-3) is an example of a photopolymerizable fluorine-containing monomer represented by Formula (8-1).

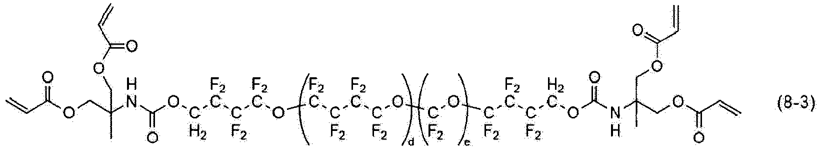

FLUOROLINK AD1700 available from SOLVAY SOLEXIS Inc. may be used as the photopolymerizable fluorine-containing monomer represented by Formula (8-3).

In one embodiment, the siloxane compound according to an embodiment may be represented by Formula (1).

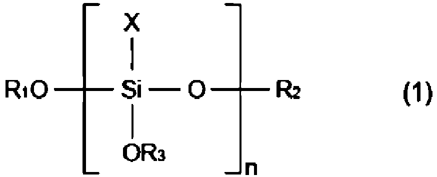

In Formula (1), R₁ to R₃ are each independently a linear or branched alkyl group having a carbon number of 1 to 10. Also, X is at least one selected from a photoreactive group, an alkyl group, a phenyl group, an amino group, an isocyanate group, a vinyl group, a mercapto group, and a glycidoxy group. X includes at least two photoreactive groups. Also, n is an integer of 1 to 20. R₁ to R₃ may be each independently the same alkyl group or may be different from one another. Further, the silicon-containing compound represented by Formula (1) may be a plurality of types.

Here, R₁ to R₃ may be each independently a methyl group or an ethyl group. Also, X may be an acryloyl group or a methacryloyl group. Also, n may be an integer of 2 to 10.

The siloxane compound according to an embodiment binds with the surrounding photo-curable fluorine-containing resin or hollow silica particles 131. The siloxane compound is, for example, photopolymerized through a photocurable fluorine-containing resin and a photoreactive group. Also, the siloxane compound may, for example, form a siloxane bond with the hollow silica particles 131. Also, the siloxane compounds may bind to each other. For example, parts of R₁ to R₃ of Formula (1) may be substituted with hydrogen and then hydrolyzes to bind to each other. Thus, the siloxane compound may form siloxane bonds in a vertical direction or a horizontal direction of Formula (1). In this regard, film strength of the low-refractive index layer 13 may improve. Accordingly, film strength may not be deteriorated even when a one-end reactive-type photopolymerizable fluoropolymer is added as an additive.

An amount of the siloxane compound may be 5.0 wt% or greater. That is, a value when the total amount of the components other than the one-end reactive-type photopolymerizable fluoropolymer, as an additive, from the low-refractive index layer 13 is 100 wt%. An example of the siloxane compound may be KR-513 available from Shin-Etsu Chemical Co., Ltd..

Also, pentaerythritol triacrylate represented by Formula (2) may be used in addition to the siloxane compound. That is, film strength of the low-refractive index layer 13 may improve by the pentaerythritol triacrylate.

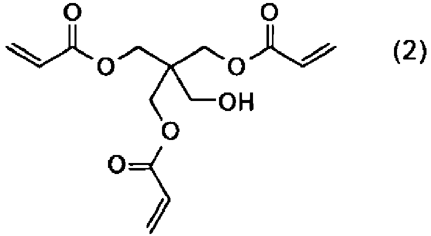

The fluoropolymer layer 133 includes a fluoropolymer. The fluoropolymer is a photopolymerized product of a one-end reactive-type photopolymerizable fluoropolymer represented by Formula (9). The fluoropolymer is an additive for giving stain resistance and slipperiness to the low-refractive index layer 13.

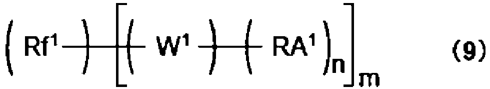

In Formula (9), Rf¹ denotes a (per)fluoroalkyl group or a (per)fluoropolyether group. W¹ denotes a linking group; RA¹ denotes a functional group having a polymeric unsaturated group. n is an integer of 1 to 3. m is an integer of 1 to 3. Also, RA¹ at a terminal may function as a photopolymerizable functional group.

A structure of a (per)fluoroalkyl group is not particularly limited. The (per)fluoroalkyl group may be, for example, a linear chain (e.g., -CF₂CF₃, -CH₂(CF₂)₄H, -CH₂(CF₂)₈CF₃, or -CH₂CH₂(CF₂)₄H). Also, the (per)fluoroalkyl group may have, for example, a branched structure (e.g., CH(CF₃)₂, CH₂CF(CF₃)₂, CH(CH₃)CF₂CF₃, or CH(CH₃)(CF₂)₅CF₂H). Also, the (per)fluoroalkyl group may be, for example, an alicyclic structure. The alicyclic structure may be, for example, a 5-membered ring or a 6-membered ring. Also, the alicyclic structure may be, for example, a perfluorocyclohexyl group, a perfluorocyclopentyl group, or an alkyl group substituted with a perfluorocyclohexyl group or a perfluorocyclopentyl group.

The (per)fluoropolyether group is a (per)fluoroalkyl group having an ether bond, and the structure is not particularly limited. That is, the serve as the siloxane compound. That is, film strength of the low-refractive index layer 13 may improve by the pentaerythritol triacrylate.

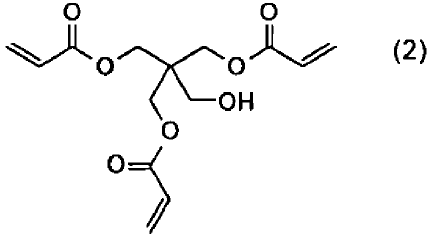

The fluoropolymer layer 133 includes a fluoropolymer. The fluoropolymer is a photopolymerized product of a one-end reactive-type photopolymerizable fluoropolymer represented by Formula (9). The fluoropolymer is an additive for giving stain resistance and slipperiness to the low-refractive index layer 13.

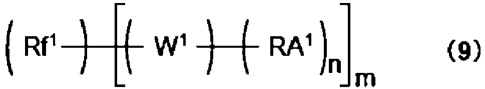

In Formula (9), Rf¹ denotes a (per)fluoroalkyl group or a (per)fluoropolyether group. W¹ denotes a linking group; RA¹ denotes a functional group having a polymeric unsaturated group. n is an integer of 1 to 3. m is an integer of 1 to 3. Also, RA¹ at a terminal may function as a photopolymerizable functional group.

A structure of a (per)fluoroalkyl group is not particularly limited. The (per)fluoroalkyl group may be, for example, a linear chain (e.g., -CF₂CF₃, -CH₂(CF₂)₄H, -CH₂(CF₂)₈CF₃, or -CH₂CH₂(CF₂)₄H). Also, the (per)fluoroalkyl group may have, for example, a branched structure (e.g., CH(CF₃)₂, CH₂CF(CF₃)₂, CH(CH₃)CF₂CF₃, or CH(CH₃)(CF₂)₅CF₂H). Also, the (per)fluoroalkyl group may be, for example, an alicyclic structure. The alicyclic structure may be, for example, a 5-membered ring or a 6-membered ring. Also, the alicyclic structure may be, for example, a perfluorocyclohexyl group, a perfluorocyclopentyl group, or an alkyl group substituted with a perfluorocyclohexyl group or a perfluorocyclopentyl group.

The (per)fluoropolyether group is a (per)fluoroalkyl group having an ether bond, and the structure is not particularly limited. That is, the (per)fluoropolyether group may be, for example, -CH₂OCH₂CF₂CF₃ or -CH₂CH₂OCH₂C₄F₈H. Also, the (per)fluoropolyether group may be, for example, -CH₂CH₂OCH₂CH₂C₈F₁₇ or -CH₂CH₂OCF₂CF₂OCF₂CF₂H. Also, the (per)fluoropolyether group may be a fluorocycloalkyl group having 5 or more fluoro atoms and a carbon number in a range of 4 to 20. Also, the (per)fluoropolyether group may be, for example, -(CF₂)ₓO(CF₂CF₂O)_{y}, [CF(CF₃)CF₂O]ₓ-[CF₂(CF₃)], (CF₂CF₂CF₂O)ₓ, or (CF₂CF₂O)ₓ. Here, x and y may be each independently an arbitrary natural number.

A linking group is not particularly limited. Examples of the linking group may include a methylene group, a phenylene group, an alkylene group, an arylene group, or a heteroalkylene group. Also, the linking group may be a combination thereof. The linking group may also have a carbonyl group, a carbonyloxy group, a carbonylimino group, a sulfonamide group, or a functional group combined thereof. The photopolymerizable functional group may be an acryloyl group or a methacryloyl group.

Also, the one-end reactive-type photopolymerizable fluoropolymer may be represented by Formulae (10) and (11).

Rf²-(OD¹)ᵣ-O(D²)_{q}-O-(CF₂)-RA² (10)

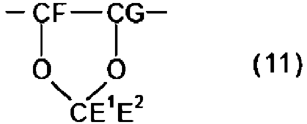

In Formula 10, Rf² is a (per)fluoroalkyl group or a (per)fluoropolyether group. Also, RA² is a reaction site at which polymerization occurs. Also, D¹ is CF₂-CF₂. D² is a compound having a cyclic structure represented by Formula (11). r and q are each independently an integer of 1 or greater. In Formula (11), E¹ and E² are each independently F or CF₂. Also, G is F or a perfluoroalkyl group having a carbon number in a range of 1 to 5.

The one-end reactive-type photopolymerizable fluoropolymer may be deemed as having a main chain at a location other than the reaction site RA², where the reaction site RA² is linked to the main chain. Also, the one-end reactive-type photopolymerizable fluoropolymer has a cyclic structure represented by Formula (11). When the one-end reactive-type photopolymerizable fluoropolymer has a cyclic structure represented by Formula (11), stain resistance and slipperiness may improve.

Here, RA² may be represented by Formula (12).

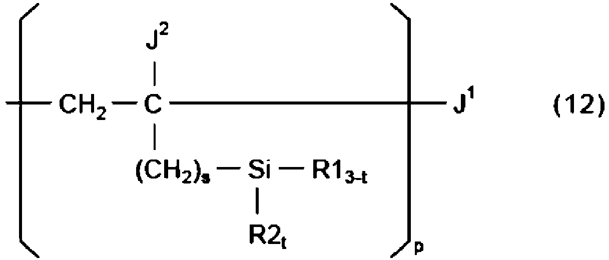

In Formula (12), J¹ is H. J² is H or a low alkyl group having a carbon number in a range of 1 to 3. R¹ is a hydrolytic group; and R2 is an acryloyl group or a methacryloyl group. Also, s and p are each independently an integer of 1 or greater; and t is 0, 1, or 2.

A reaction site RA² represented by Formula (12) may have a photopolymerizable functional group, which is an acryloyl group or a methacryloyl group, as R2 at a terminal. Also, positions other than a photopolymerizable functional group may function as spacers. By having the spacers, compatibility of the one-end reactive-type photopolymerizable fluoropolymer and the side-chain reactive-type photopolymerizable fluoropolymer may improve, and solubility in a solvent in the preparation of the low-refractive index layer 13 may increase.

Also, a hydrolysis group may be, for example, a methoxy group, an ethoxy group, a propoxy group, and an isopropoxy group.

FS series (FS-7024, FS-7025, or FS-7026) available from Fluorotechnology Inc. may be used as the one-end reactive-type photopolymerizable fluoropolymer represented by Formulae (10) and (11).

A weight average molecular weight Mw of the one-end reactive-type photopolymerizable fluoropolymer may be less than 10,000. Also, although a lower limit of the weight average molecular weight Mw of the one-end reactive-type photopolymerizable fluoropolymer is not particularly limited, the weight average molecular weight Mw of the one-end reactive-type photopolymerizable fluoropolymer may be, for example, 3000 or greater. Also, an oleic acid sliding angle of the one-end reactive-type photopolymerizable fluoropolymer may be selected according to stain resistance and slipperiness required for the low-refractive index layer 13. The oleic acid sliding angle may be, for example, 10 degrees or less. The oleic acid sliding angle may be measured by, for example, a fully automatic contact angle meter DM700 available from Kyowa Interface Science. Co., Ltd..

As the weight average molecular weight Mw of the one-end reactive-type photopolymerizable fluoropolymer increases, a surface tension of the one-end reactive-type photopolymerizable fluoropolymer reduces. That is, when the one-end reactive-type photopolymerizable fluoropolymer increases, stain resistance, slipperiness, and bleed out properties may improve. However, polarities of an acryloyl group and a methacryloyl group are large. Accordingly, when a weight average molecular weight Mw of fluoropolymer is too high, introducing functional groups thereof to a fluoropolymer may be difficult. That is, preparation of the one-end reactive-type photopolymerizable fluoropolymer may be difficult. Also, when a weight average molecular weight Mw of the one-end reactive-type photopolymerizable fluoropolymer is too high, the fluoropolymer may not be dissolved in a solvent during the formation of the low-refractive index layer 13. In particular, compatibility of the one-end reactive-type photopolymerizable fluoropolymer with the side-chain reactive-type photopolymerizable fluoropolymer may decrease.

Thus, the weight average molecular weight Mw of the one-end reactive-type photopolymerizable fluoropolymer is set as described above. In this regard, the weight average molecular weight Mw of the fluoropolymer, to which an acryloyl group or a methacryloyl group is introduced, may be decreased. Thus, an acryloyl group or a methacryloyl group may be easily introduced to the fluoropolymer.

In the low-refractive index layer 13, an amount of the one-end reactive-type photopolymerizable fluoropolymer may be in a range of 1.5 wt% to 7 wt%. This is an amount when the total amount of the hollow silica particles 131 and a photocurable fluorine-containing resin is 100 wt%. Also, the amount may be, particularly, in a range of 2.0 wt% to 5.0 wt%. When the one-end reactive-type photopolymerizable fluoropolymer is not included in the additive, a dense sea-island structure having an average surface roughness (Ra) in a range of 10 nm to 20 nm may not be formed.

The hollow silica particles 131 have a hydroxyl group on a surface thereof. Thus, the hollow silica particles 131 may not be completely mixed with the side-chain reactive-type photopolymerizable fluoropolymer. The hollow silica particles 131 have a photopolymerizable functional group on a surface thereof. Thus, the hollow silica particles 131 may polymerize with the side-chain reactive-type photopolymerizable fluoropolymer.

In this regard, a low-refractive index layer 13 of a complex three-dimensional structure (a net structure) is formed, and thus a dense sea-island structure is formed. Also, a siloxane compound bleed out the one-end reactive-type photopolymerizable fluoropolymer having a lower surface tension. Therefore, the one-end reactive-type photopolymerizable fluoropolymer remaining in the binder 132 may be reduced. Thus, a crosslinking density of the binder 132 improves, and film strength of the binder 132 improves. Also, the hollow silica particles 131 may be directly bonded to each other. That is, a photopolymerizable functional group of the hollow silica particles 131 bind to a photopolymerizable functional group of the other hollow silica particles 131.

An amount of the photocurable fluorine-containing resin may be in a range of 15 wt% to 60 wt%. That is, the amount is when the total amount of the hollow silica particles 131 and the binder 132 is 100 wt%. When the amount of the photocurable fluorine-containing resin is within this range, the sea-island structure described above may be formed. That is, in detail, the hollow silica particles 131 and the photocurable fluorine-containing resin may interact while drying the coating solution, which will be described. Also, the hollow silica particles 131 aggregate, and thus the sea-island structure may be formed. When the amount of the photocurable fluorine-containing resin is out of a range of 15 wt% to 60 wt%, the hollow silica particles 131 may not aggregate, and thus the sea-island structure may not be formed.

Also, the photocurable fluorine-containing resin is incompatible with the hollow silica particles 131. Thus, they form a dense sea-island structure. When the amount is less than 15 wt%, the dense sea-island structure may not be formed. The more preferable amount thereof is in a range of 15 wt% and 45 wt%.

Also, the one-end reactive-type photopolymerizable fluoropolymer has a fluoropolymer moiety as a basic backbone. Accordingly, the fluoropolymer portion and the hydrogen bond forming group of the binder 132 repel each other. As a result, the one-end reactive-type photopolymerizable fluoropolymer effectively bleeds out. That is, localization of the one-end reactive-type photopolymerizable fluoropolymer may occur in a surface side of the low-refractive index layer 13. In other words, the one-end reactive-type photopolymerizable fluoropolymer is mainly distributed in the surface side of the low-refractive index layer 13. Thus, a fluoropolymer layer 133 as a protection layer formed of the one-end reactive-type photopolymerizable fluoropolymer is formed on a surface of the low-refractive index layer 13.

Also, the one-end reactive-type photopolymerizable fluoropolymer binds to the hollow silica particles 131 and the binder 132 distributed in the surface of the low-refractive index layer 13. This is caused by the binding of photopolymerizable functional groups of both. Also, the one-end reactive-type photopolymerizable fluoropolymer forms a fluoropolymer layer 133. The hollow silica particles 131 and the binder 132 disposed on the surface of the low-refractive index layer 13 can be protected by the fluoropolymer layer 133. As the one-end reactive-type photopolymerizable fluoropolymer, for example, KY-1203 available from Shin-Etsu Chemical Co., Ltd. may be used.

Also, the fluoropolymer layer 133 includes modified silicone. The modified silicone has a high molecular weight and is incompatible with the binder 132. Thus, the modified silicone bleeds out along with the one-end reactive-type photopolymerizable fluoropolymer and localized on a surface of the low-refractive index layer 13. That is, the modified silicone is mainly distributed in a surface side of the low-refractive index layer 13.

In particular, the modified silicone used in the present embodiment is at least one selected from Formulae (3) to (5).

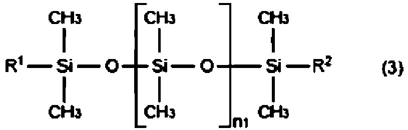

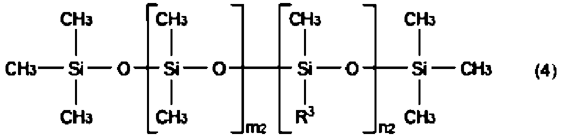

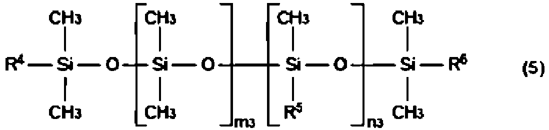

In Formulae (3) to (5), a terminal of R¹ to R⁶ may be an organic group which is any of the following functional groups. That is, R¹ to R⁶ may be an amino group (-NH2) or a hydroxyl group (-OH). Also, R¹ to R⁶ may be an isocyanate group (-N=C=O) or a vinyl group (-CH=CH2). Also, R¹ to R⁶ may be a mercapto group (-SH) or a glycidoxy group. Also, R¹ to R⁶ may be an acryloyl group (-CO-CH=CH2) or a methacryloyl group (-CO-C(CH₃)=CH₂). Further, m₂, m₃, n₁, n₂, and n₃ are each independently an integer of 1 or greater.

Also, in the organic groups, R¹ to R⁶, a linking group that couples with the functional groups may be, for example, an alkyl chain.

The modified silicon represented by Formula (3) may have methyl groups at both ends which are substituted with an organic group, and this may be referred to as "a both-end type". The modified silicon represented by Formula (4) may have methyl groups at a side chain which are substituted with an organic group, and this may be referred to as "a side-chain type". The modified silicon represented by Formula (5) may have methyl groups at both ends and a side chain which are substituted with an organic group. Here, a methyl group of only one terminal may be substituted with an organic group. That is, one side of R⁴ or R⁶ may remain a methyl group as it is. Here, this modified silicone may be referred to as "a end + side-chain type".

The terminal functional group may be an acryloyl group or a methacryloyl group. The acryloyl group and the methacryloyl group are photopolymerizable functional groups. Therefore, the acryloyl group and the methacryloyl group may be photopolymerized with a one-end reactive-type photopolymerizable fluoropolymer, and thus strength of the fluoropolymer layer 133 may improve. As a result, a strength of the outermost surface of the low-refractive index layer 13 improves, and film strength of the entire low-refractive index layer 13 also improves. Also, when the acryloyl group or the methacryloyl group is not used, the terminal functional group may be heated to be polymerized.

The modified silicone suitably used in the present embodiment may be represented by, for example, Formula (4'). This is a side-chain type belonging to Formula (4). In particular, this is an acrylic modified silicone in which a methyl group of the side-chain is substituted with a moiety having an acryloyl group at the terminal. It may also be referred to as an acryl modified straight-chain dimethylpolysiloxane. In the acryl modified silicone, a linking group connected to the terminal acryloyl group is an alkylene group that is bonded to an oxygen atom. That is, in Formula (4'), a zigzag bonding line represents an alkylene chain.

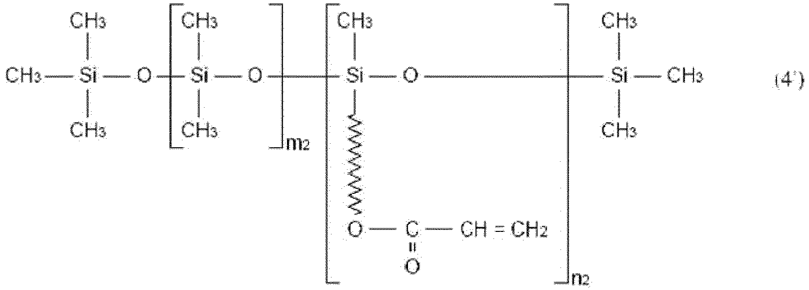

A molecular weight of the modified silicone used in this embodiment may be in a range of 15,000 g/mol or more to 50,000 g/mol or less. If the molecular weight of the modified silicone is within this range, the modified silicone is likely to be localized on the surface of the low-refractive index layer 13.

An amount of the modified silicone may be 0.5 wt% or more to 3.0 wt% or less. This is a value when the total amount of the components contained in the hollow silica particles 131 and the binder 132 is 100 wt%. When the amount of the modified silicone is less than 0.5 wt%, the film strength of the low-refractive index layer 13 may not improve. When the amount of the modified silicone exceeds 3.0 wt%, a haze value indicating turbidity of the low-refractive index layer 13 may easily increase.

Also, in Formulae (4) and (5), n₂ and n₃ may be in a range of 6 to 10. When n₂ and n₃ are within this range, strength of the fluoropolymer layer 133 may easily improve. The modified silicone may be, for example, TEGO RAD 2700 or TEGO RAD 2650 available from Evonik Degussa Japan Co., Ltd..

In the present embodiment, a photopolymerization initiator for initiating photopolymerization is used in the formation of the low-refractive index layer 13. The photopolymerization initiator is not particularly limited. However, it is preferable that the photopolymerization initiator is hardly subject to oxygen inhibition and has good surface curability. In particular, the photopolymerization initiator may be, for example, IRGACURE 907 manufactured by BASF Japan Co., Ltd..

The low-refractive index layer 13 described above may be deemed as having the following characteristics.

First, the low-refractive index layer 13 has particles having a hollow shape and a resin component as main components. The particles having a hollow shape are the hollow silica particles 131 described above. The resin component is the binder 132 described above. A conventional binder may satisfy the following conditions.

In the conditions, the maximum film thickness of the low-refractive index layer 13 needs to be 200 nm or less. When the maximum film thickness exceeds 200 nm, luminous reflectance may easily deteriorate. Also, an average thickness of the low-refractive index layer 13 needs to be in a range of 90 nm to 130 nm. When the average thickness is less than 90 nm or exceeds 130 nm, luminous reflectance may easily deteriorate. Further, an average surface roughness (Ra) needs to be in a range of 10 nm to 20 nm. When the average surface roughness (Ra) is less than 10 nm, visible reflectance may easily deteriorate. When the average surface roughness (Ra) exceeds 20 nm, scratch resistance may easily deteriorate. Also, the maximum height (Rmax) of the low-refractive index layer 13 needs to be in a range of 60 nm to 150 nm. When the maximum height (Rmax) is less than 60 nm or exceeds 150 nm, visible reflectance may easily deteriorate. Further, a 10-point average roughness (Rz) of the low-refractive index layer 13 needs to be in a range of 20 nm to 60 nm. When the 10-point average roughness (Rz) is less than 20 nm, visible reflectance may easily deteriorate. When the 10-point average roughness (Rz) exceeds 60 nm, scratch resistance may easily deteriorate. Further, a concave-convex average interval (Sm) of the low-refractive index layer 13 needs to be in a range of 20 nm to 80 nm. When the concave-convex average interval (Sm) is less than 20 nm or exceeds 80 nm, visible reflectance may easily deteriorate. Also, a visible reflectance of the low-refractive index layer 13 needs to be 0.3% or less.

The 10-point average roughness (Rz) may be obtained as follows.
(i) A reference length is taken away from a roughness curve in a direction of the average line.
(ii) From the average line of the taken part, an average value of absolute values of altitudes (Yp) up to the 5th peak from the highest peak is obtained.
(iii) An average value of absolute values of altitudes (Yv) up to the 5th valley bottom from the lowermost valley bottom is obtained.
(iv) A sum of the average value obtained in (ii) and the average value obtained in (iii) is obtained. This is the 10-point average roughness (Rz).

### <Description of method of forming hard coat layer>

In the present embodiment, distribution of the metal oxide particles 121 in the hard coat layer 12 may be controlled as Ver. 1 to Ver. 3 shown in FIG. 2. Hereinafter, a method of forming the hard coat layer 12 to control the distribution will be described.

The method of forming the hard coat layer 12 according to an embodiment may include a coating process in which a coating solution for forming the hard coat layer 12 is coated on the substrate 11. Here, the coating solution may include the metal oxide particles 121, a monomer (or an oligomer) being a base of the binder 122, a photopolymerization initiator, and a solvent that disperses and/or dissolves these.

Among these, the monomer (or oligomer) being a base of the binder 122 becomes the binder 122 by polymerizing the monomer (or oligomer) after coating of the coating solution.

In the present embodiment, the monomer may be a mixture of a first monomer represented by Formula (13) and a second monomer represented by Formula (14).

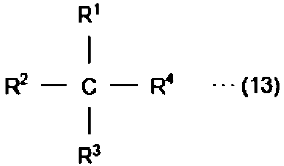

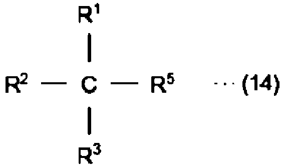

Also, in Formulae (13) and (14), R¹ to R⁴ are each independently a photopolymerizable functional group not including a hydroxyl group. Also, in Formula (14), R⁵ is a functional group having a hydroxyl group at a terminal. In particular, R¹ to R⁴ are each independently a functional group having a double bond at a terminal. This is, for example, a functional group having an acryloyl group and/or a methacryloyl group at a terminal. Example of the first monomer may be, for example, penta(meth)acrylate or pentaerythritol(meth)acrylate derivatives. R⁵ may be simply a hydroxyl group or a functional group such as -CH₂OH or -C₂H₅OH. The second monomer may be, for example, tri(meth)acrylate or trierythritol derivatives. Pentaerythritol tetraacrylate may be suitably used as the first monomer. A formula of this is C-(CH₂OOC-CH=CH₂)₄. Also, pentaerythritol triacylate may be suitably used as the second monomer. A formula of this is HOCH₂-C-(CH₂OOC-CH=CH₂)₃.

Also, in the present embodiment, a multi-branched monomer having a photopolymerizable functional group and/or a multi-branched oligomer having a photopolymerizable functional group may further be used.

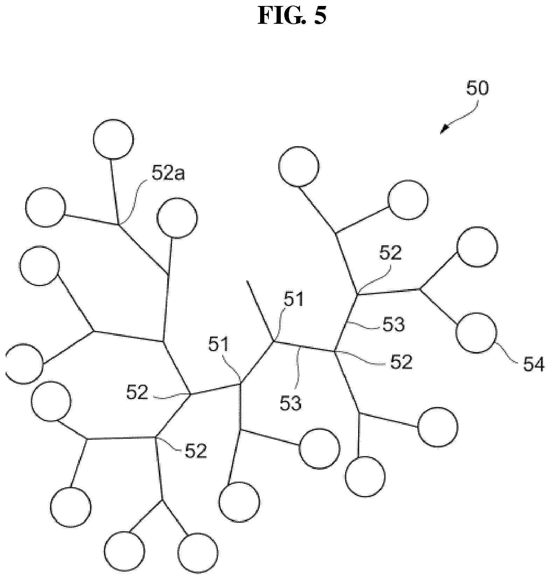

FIG. 5 is a view illustrating an example of a structure of a multi-branched monomer 50 having a photopolymerizable functional group.

Here, a structure of the multi-branched monomer 50 as a multi-branched monomer having a photopolymerizable functional group is shown. The multi-branched monomer 50 may also be referred to as hyperbranch or dendric. The multi-branched monomer 50 has a core portion 51, a plurality of branch points 52, a plurality of branch portions 53, and a plurality of photopolymerizable functional groups 54. The core portion 51 is a center portion of the multi-branched monomer 50. Also, the core portion 51 binds to at least one of the branch portion 53. The core portion 51 may be composed of a single element or may be composed of an organic residue. Examples of the single element may include a carbon atom, a nitrogen atom, a silicon atom, and a phosphorus atom. Also, examples of the organic residue may include an organic residue formed of various chain compounds or ring compounds. Also, the core portions 51 may be plural.

The branch point 52 is a starting point of the branch portion 53, and at least three branch portions 53 extend from one branch point 52. The branch point 52 is connected to the core portion 51 or another branch point 52 through the branch portion 53. The branch point 52 has the same configuration as that of the core portion 51. That is, the branch point 52 may be composed of a single element or an organic residue. Also, the branch points 52 are sequentially referred to as the first generation, the second generation, and so on from one most close to the core portion 51. That is, a branch point 52 directly connected to the core portion 51 becomes the first generation, and a branch point 52 connected to the branch point 52 of the first generation becomes the second generation.

The multi-branched monomer having a photopolymerizable functional group used in the present embodiment has a branch of the at least second generation. For example, in the example shown in FIG. 5, the multi-branched monomer 50 has a branch point 52a which is the fourth generation branch point 52. The branch portion 53 connects the core portion 51 and the branch point 52 of the first generation. Also, the branch portion 53 connects the branch point 52 of the kth generation (k is an integer of 1 or more) and the branch point 52 of the (k + 1)th generation. The branch portion 53 is a coupling hand of the core portion 51 or the branch point 52.

A photopolymerizable functional group 54 is a functional group having a double bond at a terminal thereof as described above. For example, a functional group having an acryloyl group and/or a methacryloyl group at the terminal. The multi-branched monomer 50 preferably binds to the photopolymerizable functional group 54 at the branch point 52 of the second or higher generation.

The multi-branched monomer 50 may particularly be a polyester-based, a polyamide-based, and a polyurethane-based. In addition, the multi-branched monomer 50 may be of various types such as a polyether-based, a polyether sulfone-based, a polycarbonate-based, and a polyalkylamine-based. The multi-branched monomer 50 may be a tadpole-type dendrimer, a comet-type dendrimer, a twin-type dendrimer, or a cylinder-type dendrimer.

Also, the multi-branched oligomer having a photopolymerizable functional group is obtained by polymerizing the multi-branched monomer 50 having the photopolymerizable functional group 54.

The solvent may include water and one selected from the group of solvents having a boiling point of 120°C or higher (a high boiling point solvent) at a free ratio. Also, for example, the solvent includes one selected from the group of solvents having a boiling point 90°C or lower (a low boiling point solvent) of triacetyl cellulose. That is, the solvent may include a mixture of two types of solvents. In particular, the high boiling point solvent may be diacetone alcohol, ethylene glycol monobutyl ether, or ethyleneglycol monoethyl ether. Among these, diacetone alcohol (having a boiling point of 168°C) may be suitably used. Also, the low boiling point solvent may be methyl ethyl ketone (MEK), methyl acetate, dimethyl carbonate, or 1,3-dioxolane. Among these, 1,3-dioxolane (having a boiling point of 76°C) may be suitably used.

In the present embodiment, a mixing ratio of the first monomer and the second monomer and a mixing ratio of the high boiling solvent and the low boiling solvent are adjusted. Thus, distribution of the metal oxide particles 121 in the hard coat layer 12 may be controlled. That is, the hard coat layer 12 such as Ver.1 to Ver.3 shown in FIG. 2 may be separately formed. In particular, when the first monomer and the second monomer are mixed in a weight ratio in a range of 99:1 to 90:10, the metal oxide particles 121 are unevenly distributed. That is, the hard coat layer 12 of Ver.1 or Ver.3 may be formed. Also, when a weight ratio of the high boiling point solvent to the low boiling point solvent is in a range of 1:99 to 10:90, the metal oxide particles 121 are localized on the surface side. That is, the result is the hard coat layer 12 of Ver.1. Also, when a weight ratio of the high boiling point solvent to the low boiling point solvent is a range of 25:75 to 40:60, the metal oxide particles 121 are localized on a side of the substrate 11. That is, the result is the hard coat layer 12 of Ver.3. Also, when a weight mixing ratio of the first monomer and the second monomer is in a range of 90:10 to 1:99, the metal oxide particles 121 are evenly distributed. That is, the hard coat layer 12 of Ver.2 may be resulted. Here, the hard coat layer 12 of Ver.2 is obtained despite the weight ratio of the high boiling point solvent and the low boiling point solvent.

Also, when TAC is used as the substrate 11, a surface of TAC is dissolved by using the solvent described above. In this regard, adhesion between the substrate 11 and the hard coat layer 12 further improves.

The photopolymerization initiator is a compound added to initiate the photopolymerization reaction. The photopolymerization initiator is not particularly limited. For example, the photopolymerization initiator may be an α-hydroxyacetophenone-based photopolymerization initiator. The α-hydroxyacetophenone-based photopolymerization initiator may be, for example, DAROCUR1173 available from BASF Japan Co., Ltd. shown below. Also, IRGACURE 184, IRGACURE 2959, IRGACURE 127, and ESACURE KIP 150 available from DKSH Japan Co., Ltd. may also be used. These may be used alone or in combination of two or more.

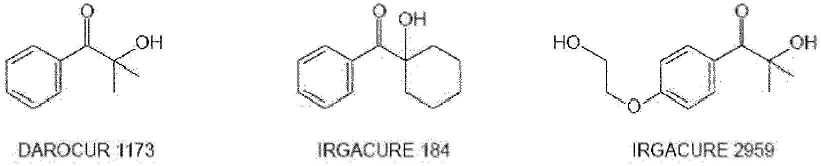

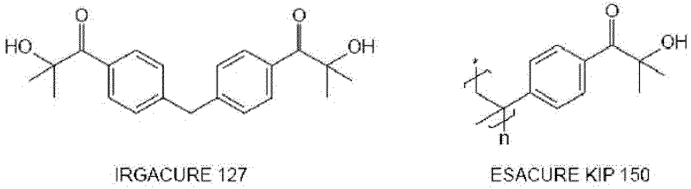

Next, the method of forming the hard coat layer 12 will be described as the whole.

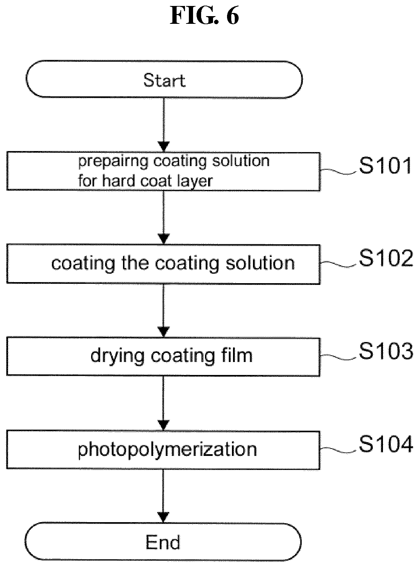

FIG. 6 is a flowchart describing the method of forming the hard coat layer 12 according to an embodiment.

First, a coating solution (a coating solution for forming a hard coat layer) for forming the hard coat layer 12 is prepared (S101: preparing a coating solution). The coating solution includes metal oxide particles 121, a monomer serving as a base of the binder 122, a multi-branched monomer 50 (a multi-branched oligomer), a photopolymerization initiator, and a solvent for dispersing and/or dissolving these. To prepare the coating solution, the metal oxide particles 121, the monomer and the multi-branched monomer 50 (a multi-branched oligomer), and the photopolymerization initiator are first added to the solvent. Then, stirring is performed to disperse and/or dissolve the metal oxide particles 121, the monomer, and the photopolymerization initiator in the solvent.

Here, a component ratio of each of the components is adjusted according to which hard coat layer 12 of Ver. 1 to Ver. 3 shown in FIG. 2 is to be formed.

Next, the substrate 11 is prepared, and the coating solution prepared in S101 is coated on the substrate 11 (S102: coating). Therefore, a coating film is formed. The coating may be carried out, for example, by a method using a wire bar.

Then, the coated coating film is dried (S103: drying). Drying may be carried out by remaining at room temperature, heating, or vacuum drawing.

Also, the monomer and the multi-branched monomer 50 (a multi-branched oligomer) are photopolymerized by irradiating light such as ultraviolet rays and electron beams (S104: photopolymerizing). As a result, the first monomer, the second monomer, and the multi-branched monomer 50 (a multi-branched oligomer) are cured by photopolymerization. Therefore, the hard coat layer 12 may be formed on the substrate 11. Further, the drying process and the photopolymerizing process may be combined as one and regarded as a curing process for forming the hard coat layer 12 by curing the coated coating solution.

According to the method for forming the hard coat layer 12, any of the hard coat layers 12 of Ver.1 to Ver.3 shown in FIG. 2 may be formed. Therefore, the hard coat layers 12 may be selected from these depending on the use of the hard coat layer 12.

When the multi-branched monomer 50 is contained, a viscosity and a surface tension of the coating solution decreases. Therefore, a surface of the hard coat layer 12 may not have a concave-convex shape but may have excellent surface smoothness. As a result, an interference pattern hardly occurs in the hard coat layer 12.

In the above example, the case where the distribution of the metal oxide particles 121 is controlled as in Ver.1 to Ver.3 shown in FIG. 2 has been described. However, although it is not necessary, occurrence of an interference pattern in the hard coat layer 12 needs to be made difficult in some cases. In this case, for example, the second monomer described above may not be added. Also, without considering a mixing ratio of the high boiling point solvent and the low boiling point solvent, either one of them may be used. Other solvents may also be used.

In some cases, the distribution of the metal oxide particles 121 needs to be controlled as in Ver. 1 to Ver. 3 shown in FIG. 2. Also, there are cases when there is no need to make occurrence of an interference pattern in the hard coat layer 12 difficult. In this case, the multi-branched monomer (a multi-branched oligomer) may not be contained.

### <Description of method of forming low-refractive index layer>

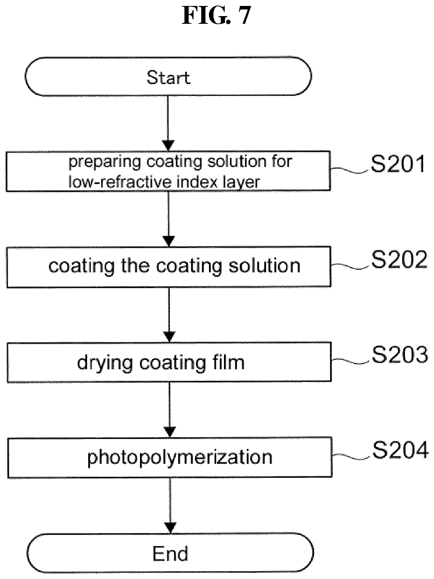

FIG. 7 is a flowchart illustrating a method of forming the low-refractive index layer 13 according to an embodiment.

When the protection layer 10 shown in FIG. 1B is formed, the hard coat layer 12 needs to be first formed on the substrate 11. Also, as it will be described below, the low-refractive index layer 13 is formed on the hard coat layer 12.

First, a coating solution for forming the low-refractive index layer 13 (a coating solution for forming a low-refractive index layer) is prepared to form the low-refractive index layer 13 (S201: preparing a coating solution). The coating solution contains the hollow silica particles 131 and a side-chain reactive-type photopolymerizable fluoropolymer, which are components of the low-refractive index layer 13. Also, the coating solution includes a siloxane compound and modified silicone. The coating solution also contains a photopolymerization initiator. These components are referred to herein as the main component. An amount of the main component is preferably 3.0 wt% or less with respect to the total amount of the coating solution. Also, the coating solution includes a one-end reactive-type photopolymerizable fluoropolymer as an additive.

Then, these are put into a solvent and stirred to prepare a coating solution. An amount of the solvent is preferably 85 wt% or more based on the total amount of the coating solution. The solvent preferably has a boiling point of 90°C or lower. As the solvent, methyl ethyl ketone (MEK) may be used.

Also, the coating solution prepared in S201 is coated by using a wire bar (S202: coating). Therefore, a coating film is formed.

Then, the coated coating film is dried by remaining at room temperature, heating, or vacuum drawing (S203: drying)

Finally, the hollow silica particles 131 and the side-chain reactive-type photopolymerizable fluoropolymer are photopolymerized by irradiating light such as ultraviolet rays and electron beams (S204: photopolymerizing). As a result, the protection film 10 may be formed. In addition, the drying process and the photopolymerizing process may be combined as one and regarded as a curing process for curing the coated coating solution to form the low-refractive index layer 13.

The low-refractive index layer 13 of the present embodiment described above contains a siloxane compound and modified silicone. Accordingly, film strength and scratch resistance of the low-refractive index layer 13 may improve. In particular, by containing modified silicone, a cross-linking density improves while maintaining low friction of the outermost surface of the low-refractive index layer 13. As a result, film strength and scratch resistance may improve. In addition, when the side chain reactive photopolymerizable fluoropolymer represented by Formula (8) is used, film strength further improves, and scratch resistance improves. Likewise, when a compound represented by Formulae (10) and (11) is used as a one-end reactive-type photopolymerizable fluoropolymer, film strength further improves, and scratch resistance improves.

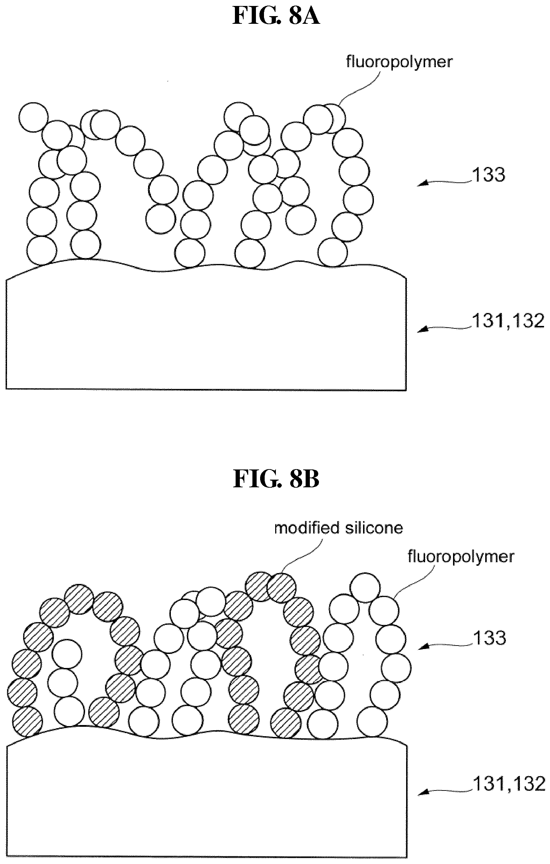

FIGS. 8A and 8B are conceptual views illustrating differences between fluoropolymer layers 133 of the low-refractive index layer 13 including and not including modified silicone.

Here, FIG. 8A is a conceptual view of the fluoropolymer layer 133 not including modified silicone. When the modified silicone is not included, the photopolymerizable functional group at the terminal of the one-end reactive-type photopolymerizable fluoropolymer is photopolymerized in a side of the binder 132. The photopolymerizable functional group at the terminal of the one-end reactive-type photopolymerizable fluoropolymer is RA1 at a terminal in Formula (9). In the side of the binder 132, it is bonded to the hollow silica particles 131 or the photopolymerizable functional group of the side-chain reactive-type photopolymerizable fluoropolymer. In this case, the fluoropolymer layer 133 maintains its strength by this bond. However, a cross-linking point at which the one-end reactive-type photopolymerizable fluoropolymer is photopolymerized are fewer since it can be positioned only at the terminal of the fluoropolymer. Therefore, the strength of the fluoropolymer layer 133 may not be sufficient.

FIG. 8B is a conceptual view of the fluoropolymer layer 133 including modified silicone. When the modified silicone is included, the fluoropolymer layer 133 includes fluoropolymer and modified silicone. In this case, the one-end reactive-type photopolymerizable fluoropolymers polymerize each other through the modified silicone. Therefore, cross-linking points further increases, and the strength of the fluoropolymer layer 133 easily improves.

When the hard coat layer 12 does not include modified silicone, the film strength of the low-refractive index layer 13 may not be secured, particularly when the hard coat layer 12 is an anti-glare (AG) type. In the AG type, the hard coat layer 12 has a concavo-convex structure on its surface. Thus, an anti-glare effect is produced as compared with the case where the surface of the hard coat layer 12 is a flat clear type. Also, the phenomenon of an image of an indoor/outdoor object being shown on a screen of a display device may be suppressed. In this regard, a surface of the hard coat layer 12 is roughened. Therefore, the film strength of the low-refractive index layer 13 formed on the hard coat layer 12 may easily be weakened. When the low-refractive index layer 13 includes the modified silicone, the film strength of the low-refractive index layer 13 can be secured even if the hard coat layer 12 is of the AG type. Therefore, in this embodiment, provided is the low-refractive index layer 13 which can be suitably used regardless of the hard coat layer 12 being a clear type or an AG type. Further, in the AG type, a surface area is larger than that of the clear type because the surface has a concave-convex structure. Thus, the surface area of the surface of the low-refractive index layer 13 formed on the hard coat layer 12 may easily become larger. Also, the number of fluoropolymers and modified silicon present in the fluoropolymer layer 133 on the surface of the low-refractive index layer 13 increases. As a result, the surface of the low-refractive index layer 13 becomes low in friction, and slipperiness thereof improves.

In the low-refractive index layer 13 of this embodiment, the one-end reactive-type photopolymerizable fluoropolymer is localized in the surface of the low-refractive index layer 13. This is because the fluoropolymer bleeds out by repulsion from the siloxane compound and the side-chain reactive-type photopolymerizable fluoropolymer. In this regard, a contact angle of the low-refractive index layer 13 increases, and wettability of a contaminated component decreases. As a result, adhering contamination component on the surface of the low-refractive index layer 13 may be suppressed.

Further, the low-refractive index layer 13 of the present embodiment uses a plurality of hollow silica particles 131 having different central particle diameters. This further improves the film strength of the low-refractive index layer 13. However, it is not always necessary to use a plurality of hollow silica particles 131 having different central particle diameters. In other words, sufficient film strength may be often achieved when the low-refractive index layer 13 includes the siloxane compound and modified silicone. Therefore, it is not necessary to use a plurality of hollow silica particles 131 having different center particle diameters.

In the low-refractive index layer 13 of the present embodiment, the hollow silica particles 131 aggregate. Also, thereby a sea-island structure is formed. This results in a lower reflectivity of the low-refractive index layer 13. Also, since the surface area of the surface of the low-refractive index layer 13 increases, the number of the one-end reactive-type photopolymerizable fluoropolymers existing on the surface of the low-refractive index layer 13 may increase. As a result, the surface of the low-refractive index layer 13 becomes low in friction, and slipperiness thereof improves. This is the same when modified silicone is included, and slipperiness of the low-refractive index layer 13 may be maintained in a better state.

### Mode of Disclosure

Hereinafter, one or more embodiments will now be described in more detail with reference to the following examples. However, these examples are not intended to limit the scope of the one or more embodiments.

First, a hard coat layer 12 according to an embodiment was formed and evaluated.

### [Formation of hard coat layer 12]

### (Example A2-1)

In Example A2-1, antimony-doped tin oxide (ATO) was used as the metal oxide particles 121. An ATO sol available from Nikki Catalysts Co., Ltd. in which 20.6 wt% of ATO was dispersed in isopropyl alcohol (IPA) was used. Then, 4.854 g of the ATO sol was weighed. That is, an amount of ATO contained in the mixture was 1.0 g. Then, 0.782 g of diacetone alcohol was added as a high-boiling point solvent and dispersed uniformly. Further, 14.86 g of 1,3-dioxolane was added as a low-boiling point solvent and stirred for 5 minutes. Then, 8.91 g of pentaerythritol tetraacrylate (A-TMMT) available from Shin-Nakamura Chemical Co., Ltd. was added as a first monomer. Further, 0.09 g of the pentaerythritol triacrylate (A-TMM-3) available from Shin-Nakamura Chemical Co., Ltd. was added as the second monomer. And the mixture was stirred until it was further homogeneous. Finally, 0.5 g of IRGACURE 184 available from BASF Japan Co., Ltd. was added as a photopolymerization initiator, and then the mixture was stirred. The coating solution was prepared as described above.

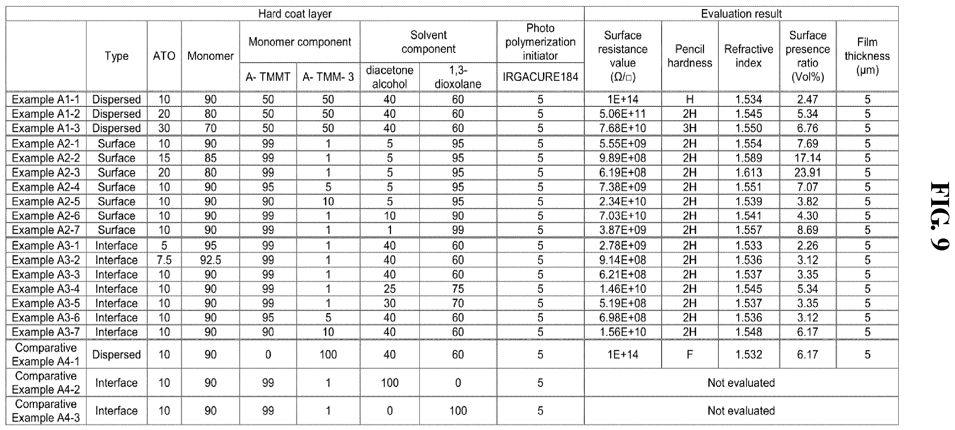

Here, as shown in FIG. 9, a weight ratio of the metal oxide particles 121, which are ATO, to a monomer including A-TMMT and A-TMM-3 was 10:90. Also, a weight ratio of A-TMMT to A-TMM-3 was 99:1. A weight ratio of diacetone alcohol to 1,3-dioxolane was 5:95. Further, the total weight of ATO and the monomer was 10.0 g. That is, an amount of ATO contained in the mixture was 10 wt%. Also, IRGACURE 184 added thereto at a ratio of 5 wt%.

Next, a substrate 11 formed of TAC was prepared, and the coating solution was coated on the substrate 11 by using a wire bar to form a coating film. Further, the coating film was allowed to stay at room temperature for 1 minute, and then dried by heating at 100°C for 1 minute. Then, an ultraviolet lamp (a metal halide lamp, light quantity: 1000 mJ/cm²) was irradiated for 5 seconds. Therefore, the coating film was cured. The hard coat layer 12 was formed on the substrate 11 by following the procedure described above. Further, in order to evaluate the hard coat layer 12, a low-refractive index layer 13 was not formed.

### (Examples A1-1 to A1-3, A2-2 to A2-7, and A3-1 to A3-7, and Comparative Examples A4-1 to A4-3)

ATO, diacetone alcohol, 1,3-dioxolane, A-TMMT, A-TMM-3, and IRGACURE 184 were changed as shown in FIG. 9. Also, the rest of the procedure was performed in the same manner as in Example A2-1 to prepare the hard coat layer 12.

### [Evaluation method]

A surface resistance value of the hard coat layer 12, a pencil hardness, a refractive index, a surface presence ratio of the metal oxide particles 121, and a film thickness were evaluated. The evaluation method will be described below.

### (Surface resistance value)

The surface resistance value was measured by using HIRESTER-UX MCP-HT800 available from Mitsibishi Chemical Analytech Co., Ltd.. Here, the measurement was performed under conditions including a temperature of 24°C and a humidity of 50%.

The lower the surface resistance value, the more difficult the hard coat layer 12 was to be charged.

### (Pencil hardness)

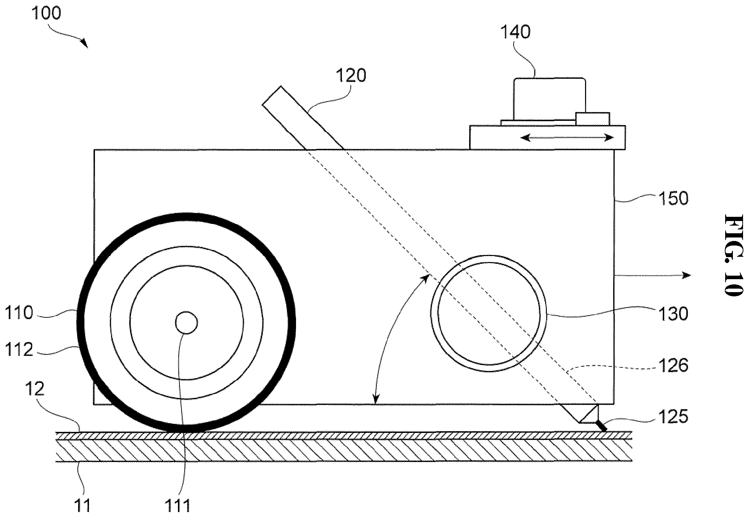

FIG. 10 is a view illustrating a pencil hardness measurement device 100 that measures a pencil hardness.

The pencil hardness measurement device 100 includes a cart wheel 110, a pencil 120, and a pencil tightening apparatus 130. The pencil hardness measurement device 100 further includes a leveling unit 140 and a case 150.

Two cart wheels 110 are provided on both sides of the case 150. The two cart wheels 110 are connected by an axle 111. The axle 111 is mounted on the case 50 through a bearing which is not shown. Also, the cart wheel 110 is formed of a metal and has an O-ring 112 formed of rubber at its outer diameter.

The pencil 120 may be mounted to the case 150 through the pencil tightening apparatus 130. The pencil 120 has a lead 125 having a predetermined hardness at the tip thereof. The pencil 120 is mounted at an angle of 45° with respect to the substrate 11 on which the hard coat layer 12 to be tested is formed. Also, the lead 125 of the tip portion is in contact with the base material 11 on which the hard coat layer 12 is formed. The lead 125 is adjusted to be exposed 5 mm to 6 mm by whittling a wood portion 126 of the pencil 120. Further, the lead 125 is polished by using a sand paper such that its tip is flattened. Also, a weight of 500 g is applied to the substrate 11 on which the hard coat layer 12 is formed at the tip of the lead 125.

In this configuration, the pencil hardness measurement device 100 is movable by pushing the case 150. That is, when the pencil hardness measurement device 100 is pushed, the device 100 may be moved in the horizontal direction in the drawing on the substrate 11 on which the hard coat layer 12 is formed. Here, the cart wheel 110 rotates, and the lead 125 of the pencil 120 moves while pressing on the hard coat layer 12.

When actually measuring the pencil hardness, a horizontal level is first confirmed by the leveling unit 140. Then, the lead 125 of the pencil 120 is moved in the right direction in the drawing while pressing the substrate 11 on which the hard coat layer 12 is formed. At this time, the device 100 is pushed a distance of at least 7 mm at a speed of 0.8 mm/s. The presence or absence of abrasion on the hard coat layer 12 is visually confirmed. This is performed sequentially by changing the pencil 120 and varying the hardness of the lead 125 from 6B to 6H. A hardness of the hardest lead 125 which does not generate abrasion is referred to as the pencil hardness.

The harder pencil hardness means that the hard coat layer is hard.

### (Refractive index)

A side (a back side) not having the hard coat layer 12 on the substrate 11 having the hard coat layer 12 thereon was completely painted with black ink. Also, the surface reflectance (SCI: Specular Components Include) was measured using a CM-2600d spectrophotometric colorimeter available from Konica Minolta Co., Ltd.. The measurement conditions included a measurement diameter of 8 mm, a viewing angle of 2°, and a light source D65. A film refractive index of the hard coat layer 12 was calculated from the surface reflectance.

### (Surface presence ratio of metal oxide particles)

The presence ratio of the metal oxide particles 121 on the surface of the hard coat layer 12 was calculated based on the film refractive index of the hard coat layer 12. That is, since the refractive index of the metal oxide particles 121 and the refractive index of the binder 122 were already obtained, the surface presence ratio of the metal oxide particles 121 could be calculated based thereon.

### (Film thickness)

Measurement of a film thickness was performed by using a visible spectroscopic Ellipsometer Smart SE available from Horiba Scientific.

### [Evaluation result]

The results of the evaluation are shown in FIG. 9.

In FIG. 9, the surface localized type (Ver. 1) of FIG. 2A was written as "surface". Also, the dispersed type (Ver. 2) of FIG. 2B was written as "disperse". Also, the interface localized type (Ver. 3) of FIG. 2C was written as "interface".

Regarding the pencil hardness, Examples A1-1 to A1-3, A2-1 to A2-7, and A3-1 to A3-7 were "H" or harder and were good overall. Whereas, Comparative Example A4-1 having A-TMMT and A-TMM-3 at a weight ratio of 0:100 was "F". That is, the result of Comparative Example A4-1 was inferior in terms of the pencil hardness.

Also, in Comparative Example A4-2, in which the weight ratio of diacetone alcohol and 1,3-dioxolane was set to 100:0 as a solvent, an interference pattern was largely generated. In addition, appearance defects of citron peel-like appearance occurred. For that reason, the evaluation was not performed. In Comparative Example A4-3, in which the weight ratio of diacetone alcohol and 1,3-dioxolane was 0:100 as a solvent, whitening occurred, and surface roughness was observed. For that reason, the evaluation was not performed.

As shown in FIG. 9, when the weight mixing ratio of A-TMMT as the first monomer and A-TMM-3 as the second monomer is set to 99:1 to 90:10, the metal oxide particles 121 are unevenly distributed. When the weight ratio of the high-boiling point solvent and the low-boiling point solvent is set to 1:99 to 10:90, those of the surface localized type (Ver.1) are obtained (Examples A2-1 to A2-7). When the weight ratio of the high-boiling point solvent to the low-boiling point solvent is set to 25:75 to 40:60, those of the interfacial localized type (Ver.3) are obtained (Examples A3-1 to A3-7 and Comparative Examples A4-2 to A4-3).

When the weight mixing ratio of the first monomer and the second monomer is out of the above range, for example, 50:50, those of the dispersed type (Ver.2) are obtained (Examples A1-1 to A1-3 and A4-1).

Comparing Examples A1-1 to A1-3 of the dispersed type with the other Examples, it can be seen that Examples A1-1 to A1-3 have relatively high surface resistance values. Therefore, the surface localized type or the interface localized type is relatively low in the surface resistance value. In other words, the other Examples had better results. That is, when the same amount of ATO is used, the surface resistance value of the surface localized type or the interface localized type is relatively lower than that of the dispersed type. It can also be said that an amount of ATO needed to be used in the surface localized type or the interface localized type may be reduced.

Next, Examples A2-1 to A2-3 resulted in the surface localized type were each compared. The higher the content of ATO, the lower the surface resistance value. Also, when Examples A3-1 to A3-3 resulted in the interfacial localized type were each compared, the surface resistance value became lower as the content of ATO increased.

Further, Examples A2-3 to A2-5 resulted in the surface localized type were each compared. In the weight mixing ratio of A-TMMT and A-TMM-3, a ratio of A-TMMT was increased, and a ratio of A-TMM-3 was decreased. Then, it may be known that the surface resistance value decreased as the ratio of A-TMMT was increased.

Also, the same was happened when Examples A3-5 to A3-7 resulted in the interface localized type were each compared.

Next, Examples A2-1, A2-6, and A2-7 resulted in the surface localized type were compared. The weight ratio of diacetone alcohol as a high-boiling point solvent to 1,3-dioxolane as a low-boiling point solvent was observed. When the ratio of diacetone alcohol was decreased, and the ratio of 1,3-dioxolane was increased, the surface resistance value decreased.

Further, Examples A3-4 and A3-5 resulted in the interface type were compared. In this case, on the contrary, when the ratio of the diacetone alcohol was increased, the surface resistance value decreased.

Also, the hard coat layer 12 was formed and evaluated by using another method.

### [Formation of hard coat layer 12]

### (Example B1)

In this embodiment, antimony-doped tin oxide (ATO) was used as the metal oxide particles 121. An ATO sol available from Nikki Catalysts Co., Ltd. in which 20.6 wt% of ATO was dispersed in IPA was used. Then, 4.854 g of the ATO sol was weighed. That is, an amount of ATO contained in the mixture was 1.0 g. Then, 19.97 g of diacetone alcohol was added as a high-boiling point solvent and dispersed uniformly. Further, 13.31 g of 1,3-dioxolane was added as a low-boiling point solvent and stirred for 5 minutes. Then, 17.60 g of A-TMMT available from Shin-Nakamura Chemical Co., Ltd. was added as a first monomer. Further, 0.60 g of CN 2304 was added as the multi-branched monomer 50. And the mixture was stirred until it was further homogeneous. Finally, 0.8 g of IRGACURE 184 available from BASF Japan Co., Ltd. was added as a photopolymerization initiator, and then the mixture was stirred. The coating solution was prepared as described above.

Here, the total solid content was 20.00 g. Thus, an amount of the ATO in the mixture was 5 wt%. Also, an amount of the first monomer in the mixture was 88 wt%, and an amount of the multi-branched monomer 50 in the mixture was 3 wt%. Also, an amount of IRGACURE184 in the mixture was 4 wt%.

Next, a substrate 11 formed of TAC was prepared, and the coating solution was coated on the substrate 11 by using a wire bar to form a coating film. Further, the coating film was allowed to stay at room temperature for 1 minute, and then dried by heating at 100°C for 1 minute. Then, an ultraviolet lamp (a metal halide lamp, light quantity: 1000 mJ/cm²) was irradiated for 5 seconds. Therefore, the coating film was cured. The hard coat layer 12 was formed on the substrate 11 by following the procedure described above. Further, in order to evaluate the hard coat layer 12, a low-refractive index layer 13 was not formed.

### (Examples B2 to B6 and Comparative Examples B1 to B3)

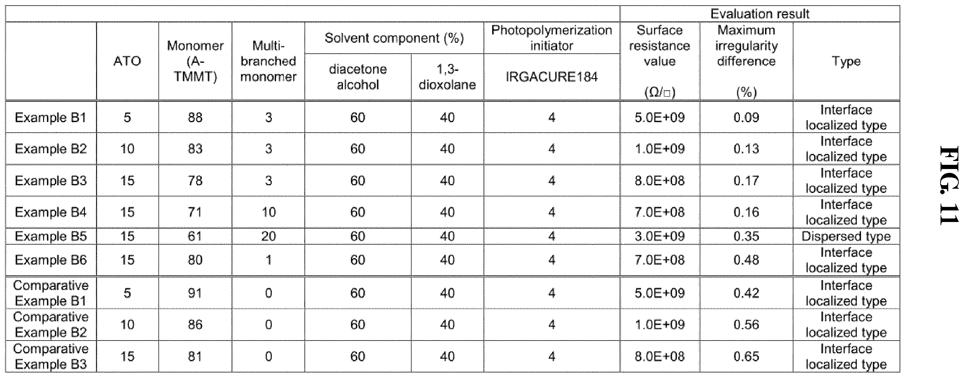

The hard coat layer 12 was formed in the same manner as in Example B1, except that ATO, A-TMMT, the multi-branched monomer 50, diacetone alcohol, 1,3-dioxolane, and IRGACURE 184 were changed as shown in FIG. 11. In Examples B2 to B6, the amount of the multi-branched monomer 50 used in Example B1 was changed. In Comparative Examples B1 to B3, the multi-branched monomer 50 was not included.

### [Evaluation method]

A surface resistance value of the hard coat layer 12 and the maximum irregularity difference on a surface of the hard coat layer 12 were evaluated. Hereinafter, the evaluation method will be described.

### (Surface resistance value)

A surface resistance value was measured as described above.

### (Maximum irregularity difference)

The surface reflectance of the hard coat layer 12 was measured with a UV-Vis-NIR spectrophotometer UV-2600 available from Shimadzu Corporation. The maximum irregularity difference was calculated by using the waveform at a wavelength of 500 nm or more and 600 nm or less of the obtained surface reflection spectrum. The value obtained by subtracting the bottom value B from the peak value A of the waveform was defined as the maximum irregularity difference. That is, A% - B% = maximum irregularity difference%.

The lower the value of the maximum irregularity difference means that the interference pattern is hardly generated in the hard coat layer 12.

### [Evaluation result]

The results of evaluation are shown in FIG. 11.

When the surface resistance value is less than 1.0×10¹⁰ Ω/□, the result was written as good. All of Examples B1 to B6 and Comparative Examples B1 to B3 were less than 1.0×10¹⁰ Ω/□, and thus their surface resistance values were all good.

In addition, the maximum irregularity difference was larger in Comparative Examples B1 to B3, and smaller in Examples B1 to B6. That is, in Examples B1 to B6, the interference pattern was hardly generated in the hard coat layer 12 as compared with Comparative Examples B1 to B3. This is believed to be due to the effect of including the multi-branched monomer 50.

Further, an effect of suppressing an interference pattern even increased when the maximum irregularity difference was less than 0.2%. Examples B1 to B4 satisfied this condition. Therefore, in the present embodiment, it is considered preferable that the content of the multi-branched monomer 50 is in a range of 3 wt% or more to 10 wt% or less in the solid content.

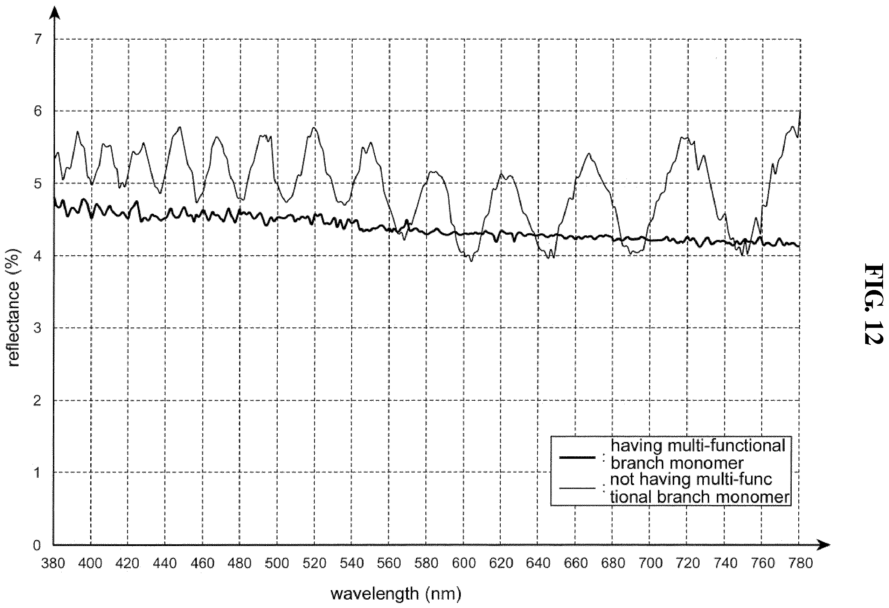

FIG. 12 is a view comparing the relationships between a wavelength and a reflectance when the maximum irregularity difference is less than 0.2% by including the multi-branched monomer 50 and when the multi-branched monomer 50 is not contained. In FIG. 12, a horizontal axis represents the wavelength, and a vertical axis represents the reflectance. Also, the thick line indicates the case when the multi-branched monomer 50 is contained, and the thin line indicates the case when the multi-branched monomer 50 is not contained.

As shown in FIG. 12, when the multi-branched monomer 50 is contained, the reflectance change is small in the change of the wavelength. This means that no interference has occurred in the hard coat layer 12. On the other hand, when the multi-branched monomer 50 is not contained, the reflectance significantly increases or decreases in the change of the wavelength. This means that interference occurs in the hard coat layer 12, and light of the wavelength at a place where a peak is formed is intensified by the interference. Therefore, in this case, an interference pattern is formed in the hard coat layer 12.

Next, the low-refractive index layer 13 according to the present embodiment was formed and evaluated.

### [Formation of low-refractive index layer 13]

### (Example C1)

In Example C1, two types of the hollow silica particles 131 were used. SURURIA 4320 (having a central particle diameter of 60 nm) available from Nikki Catalysts Co., Ltd. was used. Also, SURURIA 5320 (having a central particle diameter of 75 nm) available from Nikki Catalysts Co., Ltd. was used. As active ingredients, 2.5 parts by weight of the former and 60.5 parts by weight of the latter were used. Also, 28 parts by weight of OPTOOL AR-110 available from Daikin Industries, Ltd. was used as a side-chain reactive-type photopolymerizable fluoropolymer. This is a side-chain reactive-type photopolymerizable fluoropolymer that may be represented by Formula (6) and (7). 5 parts by weight of KR-513, a product of Shin-Etsu Chemical Co., Ltd., which is a silicon-containing compound, was used as a siloxane compound. Also, 1 part by weight of TEGO RAD 2700 available from Evonik Degussa Japan Co., Ltd. was used as the modified silicone. Further, 3 parts by weight of IRGACURE 907 available from BASF Japan Co., Ltd. was used as a photopolymerization initiator. Further, the total amount thereof was made 100 parts by weight as main components.

Also, 5 parts by weight of KY-1203 available from Shin-Etsu Chemical Co., Ltd. was used as the one-end reactive-type photopolymerizable fluoropolymer, which was an additive.

Then, these were dispersed and/or dissolved in methyl ethyl ketone (MEK) as a solvent. Also, an amount of the one-end reactive-type photopolymerizable fluoropolymer and the main components other than the photopolymerization initiator was 1.5 wt%. The coating solution for the low-refractive index layer 13 was prepared as described above.

Next, a substrate 11 formed of polymethylmethacrylate (PMMA) resin was prepared. The coating solution was coated on the substrate 11 by using a wire bar to form a coating film. Further, the coating film was allowed to stay at room temperature for 1 minute, and then dried by heating at 100°C for 1 minute. Then, an ultraviolet lamp (a metal halide lamp, light quantity: 1000 mJ/cm²) was irradiated for 5 seconds under a nitrogen atmosphere (oxygen concentration: 500 ppm or less). Thus, the coating film was cured. The low-refractive index layer 13 was formed on the substrate 11 by following the procedure described above. Further, in order to evaluate the hard coat layer 12, a low-refractive index layer 13 was not formed. Further, the film thickness of the low-refractive index layer 13 thus formed averages 90 nm to 110 nm. The film thickness was measured using a visible spectrum Ellipsometer Smart SE manufactured by Horiba Inc.. An average of the film thickness was determined as an arithmetic average value of the maximum value and the minimum value of the measured values. In addition, the hard coat layer 12 was not formed to evaluate the low-refractive index layer 13.

### (Examples C2 to C4)

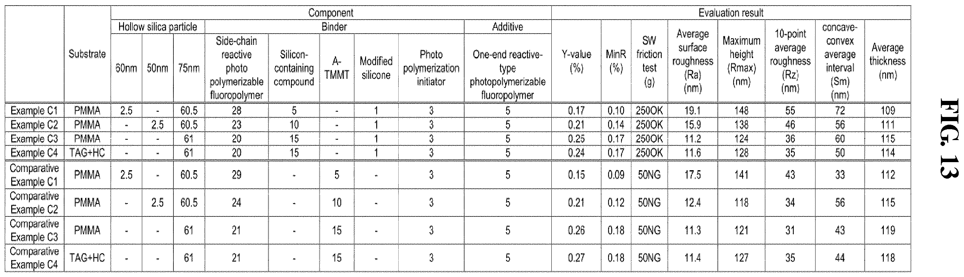

A low-refractive index layer 13 was formed in the same manner as in Example C1, except that the components used for forming the low-refractive index layer 13 in Example C1 were changed as shown in FIG. 13.

In Example C2, the hollow silica particles 131 were changed. That is, SURURIA 4320 (having a central particle diameter of 60 nm) available from Nikki Catalysts Co., Ltd. was not used. Also, SURURIA 2320 (having a central particle diameter of 50 nm) available from Nikki Catalysts Co., Ltd. was used instead. That is, SURURIA 2320 (having a central particle diameter of 50 nm) and SURURIA 5320 (having a central particle diameter of 75 nm) were used. As the active ingredient, 2.5 parts by weight of the former and 60.5 parts by weight of the latter were used.

In Example C3, only SURURIA 5320 (having a central particle diameter of 75 nm) was used as the hollow silica particles 131. 61 parts by weight was used as an effective ingredient.

In Example C4, the hollow silica particles 131 were prepared as in Example C3. However, in Example C4, the low-refractive index layer 13 was formed on the hard coat layer 12 formed in Example B1. That is, the hard coat layer 12 was formed on TAC, and the low-refractive index layer 13 was formed thereon (shown as TAC + HC in FIG. 13).

### (Comparative Examples C1 to C4)

In Comparative Examples C1 to C4, modified silicone was not used in comparison with Examples C1 to C4. Also, the same amount of A-TMMT was used instead of the silicon-containing compound.

### [Evaluation method]

A Y-value of the low-refractive index layer 13, MinR, and a SW friction test were evaluated. Hereinafter, the evaluation method will be described.

### (Y-value, MinR)

A side (a back side) not having the low-refractive index layer 13 on the substrate 11 having the low-refractive index layer 13 thereon was completely painted with black ink. Then a reflectance (Y-value, visible reflectance) of specular light was measured. Here, a CM-2600d spectrophotometric colorimeter available from Konica Minolta Co., Ltd. was used. Also, the measurement conditions included a measurement diameter of 8 mm, a viewing angle of 2°, and a light source D65.

Also, a change in the Y-value with respect to a frequency of light was examined, and a value when the Y-value was the smallest was set as MinR.

The lower the Y-value and the lower the MinR, the lower the reflectivity of the low-refractive index layer 13. In the present embodiment, when the Y-value (visual sensitivity reflectance) becomes 0.3% or less, it was deemed as good.

### (SW friction test)

A steel wool (SW) was wound around the periphery of a circumference of about 1 cm² on the surface of the substrate 11 on which the low-refractive index layer 13 was formed and pressed. Then, a load was applied to the SW, and a friction test was carried out for 10 reciprocations (with a travel distance of 70 mm). Here, a moving speed was 140 mm/s. Then, the load was changed to determine whether abrasion occurred by the naked eye.

The larger the value of the SW friction test, the higher the film strength of the low-refractive index layer 13.

(Average surface roughness (Ra), maximum height (Rmax), 10-point average roughness (Rz), concave-convex average interval (Sm), and average thickness)

An average surface roughness (Ra), maximum height (Rmax), 10-point average roughness (Rz), concave-convex average interval (Sm), and average thickness of the low-refractive index layer 13 were measured.

### [Evaluation result]

The results of evaluation are shown in FIG. 13. In the SW friction test of FIG. 13, values to which OK is given mean that abrasion did not occur due to the load in the SW friction test of FIG. 13. Values to which NG is given mean that abrasion occurred due to the load.

As shown in FIG. 13, the Y-value and MinR of all Examples C1 to C4 and Comparative Examples C1 to C4 were good.

In the SW friction test, no abrasion was observed even in the cases of Examples C1 to C4 using a silicone-containing compound and modified silicone under a load of 250 g. As a result, it can be seen that it is not necessary to use a plurality of hollow silica particles 131 having different particle diameter distributions. In contrast, Comparative Examples C1 to C4, which did not use the silicon-containing compound and modified silicone, abrasion occurred only by adding a load of 50 g. That is, it may be known that when the silicon-containing compound and the modified silicone are used, the film strength of the low-refractive index layer 13 increases, and the scratch resistance improves.

Also, the low-refractive index layer 13 was further formed as follows to perform evaluation.

### [Formation of low-refractive index layer 13]

### (Examples C5 to C18)

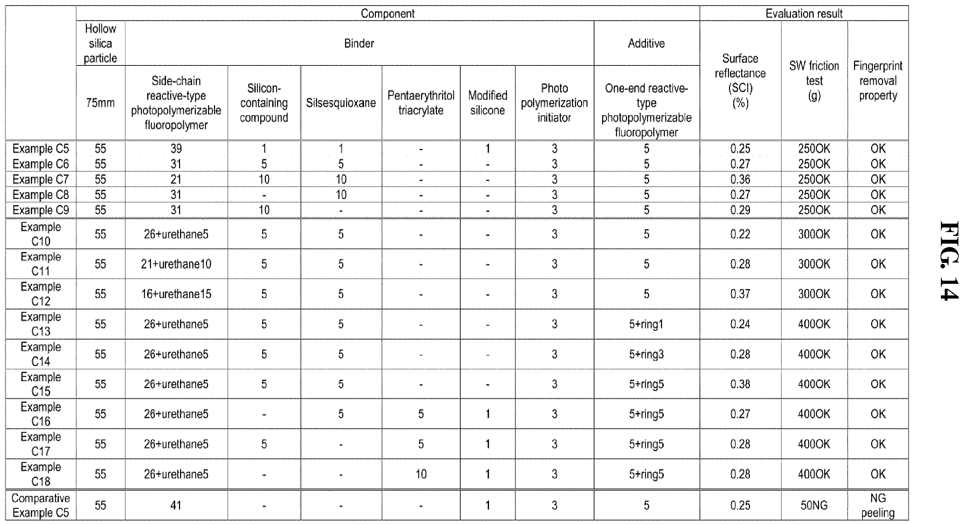

The components used to form the low-refractive index layer 13 of Example C1 were changed as shown in FIG. 14. Also, the rest was performed the same as in Example C1 to form the low-refractive index layer 13.

Here, in Examples C10 to C18, the hollow silica particles 131 were changed. That is, SURURIA 5320 (having a central particle diameter of 75 nm) available from Nikki Catalysts Co., Ltd. was used. As the active ingredient, 55 parts by weight of this was used. Also, in Examples C5 to C7 and C10 to C15, the silicon-containing compound and silsesquioxane were used together as a siloxane compound. Also, in Examples C8 and C16, silsesquioxane was used as a siloxane compound, and the silicon-containing compound was not used. In Examples C9 and C17, the silicon-containing compound was used as a siloxane compound, and silsesquioxane was not used.

In Examples C10 to C18, FLUOROLINK AD1700 available from SOLVAY SOLEXIS Inc. was used as a photopolymerizable fluorine monomer. In FIG. 14, for example, this is written as "+urethane 5". This indicates that 5 parts by weight of FLUOROLINK AD1700 was used in combination.

In Examples C13 to C18, FS-7025 available from Fluoro Technology Co., Ltd. was used as a one-end reactive-type photopolymerizable fluoropolymer. For example, this case was written as "+ring 1". This indicates that 1 part by weight of FS-7025 was used in combination.

In Examples C16 to C18, pentaerythritol triacrylate was used. Among them, in Example C16, silsesquioxane and pentaerythritol triacrylate were used, and a silicon-containing compound was not used. In Example C17, a silicon-containing compound and pentaerythritol triacrylate were used, and silsesquioxane was not used. In Example C18, pentaerythritol triacrylate was used, but a silicon-containing compound and silsesquioxane were not used.

### (Comparative Example C5)

In comparison of Examples C5 to C9, a silicon-containing compound and silsesquioxane, as a siloxane compound, and pentaerythritol triacrylate were not used at all.

### [Evaluation method]

A surface reflectance (SCI) of the low-refractive index layer 13, a SW friction test, and a fingerprint removal property were evaluated. Hereinafter, the evaluation method will be described.

### (Surface reflectance (SCI))

A side (a back side) not having the low-refractive index layer 13 on the substrate 11 having the low-refractive index layer 13 thereon was completely painted with black ink. Then a surface reflectance (SCI: specular components include) was measured by using a CM-2600d spectrophotometric colorimeter available from Konica Minolta Co., Ltd.. Here, the measurement conditions included a measurement diameter of 8 mm, a viewing angle of 2°, and a light source D65.

### (SW friction test)

The SW friction test was performed in the same manner as in the SW friction test described in relation to Examples C1 to C4 and Comparative Examples C1 to C4.

### (Fingerprint removal property)

A fingerprint was attached to the surface of the low-refractive index layer 13 and wiped with cotton reciprocating 10 times under a load of 500 g. Then, it was confirmed whether the fingerprint was removed or not.

### [Evaluation result]

The results of the evaluation are shown in FIG. 14. In the fingerprint removal property test of FIG. 14, OK denotes that the fingerprint was removed. Whereas NG denotes that the fingerprint remained or that scratches occurred on the surface of the low-refractive index layer 13. Also, NG peeling denotes that peeling occurred from the low-refractive index layer 13.

As shown in FIG. 14, the surface reflectance (SCIs) of Examples C1 to C18 and Comparative Example C5 were all relatively good.

As for the SW friction test, abrasion did not occur in Examples C5 to C9 using a siloxane compound even when a load of 250 g was applied. Further, in Examples C10 to C12 in which FLUOROLINK AD1700 was used as a photopolymerizable fluorine monomer, abrasion did not occur even when a load of 300 g was applied. In addition, in Examples C13 to C15 in which FS-7025 was used as a one-end reactive-type photopolymerizable fluoropolymer, abrasion did not occur even when a load of 400 g was applied. Also, in Examples C16 to C18 in which pentaerythritol triacrylate was also used, abrasion did not occur even when a load of 400 g was applied. On the contrary, for Comparative Example C5 in which a siloxane compound or pentaerythritol triacrylate was not used, abrasion occurred when a load of only 50 g was applied.

As for the fingerprint removal property, fingerprints were removed when Examples C5 to C17 using the siloxane compound were used. Fingerprints were also removed when Example C18 using pentaerythritol triacrylate, instead of the siloxane compound, was used. On the other hand, peeling occurred from the low-refractive index layer 13 when Comparative Example C5 not using a siloxane compound or pentaerythritol triacrylate was used.

That is, when a siloxane compound, pentaerythritol triacrylate, FLUOROLINK AD1700 as a photopolymerizable fluorine-containing monomer, and FS-7025 as a one-end reactive-type photopolymerizable fluoropolymer are used, the low-refractive index layer 13 may have improved film strength, improved scratch resistance, and improved resistance to a wiping out process.

Next, a polarization film D according to the present embodiment is prepared and evaluated.

### [Preparation of polymerization film D]

### (Example D1)

The polarization film D was prepared by sandwiching and laminating a polymer film containing iodine compound molecules in PVA with a polymer film formed of TAC. Here, air was prevented from entering. On one surface of the TAC, a hard coat layer 12 and a low-refractive index layer 13 were formed under the same conditions of Example B1 and Example C4.

### (Comparative Example D1)

A polarization film was prepared as in Example D1, except forming hard coat layer 12 and a low-refractive index layer 13.

### [Evaluation method]

A Y-value, MinR, and color were evaluated as optical properties of the polarization film D. Also, the performance of a polarizing plate of the polarization film D was evaluated.

The Y-value and MinR of polarization film D were measured in the same manner as described above. The color of the polarization film D can also be measured with the same device.

The performance of the polarizing plate was measured as follows. First, the polarization film D was set on an ultraviolet visible spectrophotometer V-7100 available from Jasco Co.. Next, the ultraviolet visible spectrum was measured when a linear polarizing light in a transmission axis direction was incident on the polarization film D. Further, the ultraviolet visible spectrum was measured when a linear polarizing light in an absorption axis direction was incident on the polarization film D. Then, based on the ultraviolet visible spectrums, a single-body transmittance and a degree of polarization were calculated.

### [Evaluation result]

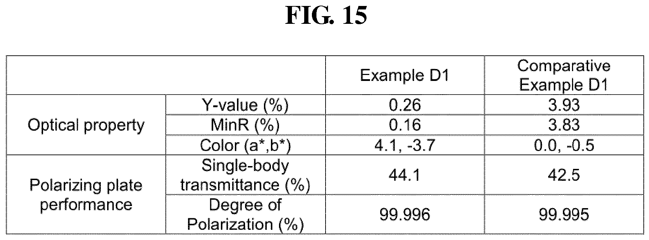

The evaluation results are shown in FIG. 15. In comparison of Example D1 and Comparative Example D1, the Y-value and MinR of Example D1 were significantly smaller than those of Comparative Example D1. This means that the reflectance significantly decreased. There was no significant difference in color between the two.

Regarding the performance of the polarizing plate, the polarizing degrees of both were equal. Example D1 exhibited a higher unit transmittance and better performance than those of Comparative Example D1.

Next, a display device 1 using the polarization film D of Example D1 was evaluated.

### [Preparation of display device 1]

### (Example E1)

The polarization film D of Example D1 was assembled to the display device 1.

### (Comparative Example E1)

The polarization film D of Comparative Example D1 was assembled to the display device 1.

### [Evaluation method]

A Y-value of a surface was measured in the same manner described above while the display device was inoperative.

### [Evaluation result]

The Y-value in the display device 1 of Example E1 was 2.3%, whereas the Y-value in the display device of Comparative Example E1 was 6%.

That is, the display device 1 of Example E1 has a low reflectance than that of the display device of Comparative Example E1 and suppresses reflection of external light. In addition, when an image was displayed by operating the display device 1 of Example E1, the phenomenon of displaying the image of an indoor/outdoor object on a screen of the display device 1 by reflecting external light reduced, and the precisely image could be displayed.

In Examples, the display device 1 has been shown as forming the hard coat layer 12 and the low-refractive index layer 13 in the liquid crystal panel, but embodiments are not limited thereto. For example, the hard coat layer 12 and the low-refractive index layer 13 may be formed on an OLED or a Braun tube. Also, embodiments are not limited to a display device but the hard coat layer 12 and the low-refractive index layer 13 may be formed on a surface of a lens. In this case, the substrate 11 may be a lens body formed of a material such as glass or plastic. Also, the lens on which the hard coat layer 12 and the low-refractive index layer 13 are formed is an example of an optical member.

Although the hard coat layer 12 is provided in the above examples, it is not necessary to provide the hard coat layer 12 if the hard coat layer 12 is not required. The configuration of the hard coat layer 12 is not limited to the above-described forms. That is, it may be manufactured in other configurations or by using another formation method.

### INDUSTRIAL APPLICABILITY

According to an embodiment, an optical member, a polarizing member, and a display device employing the same may be used effectively in their manufacture.

## Claims

1. An optical member comprising:
a substrate; and
a low-refractive index layer formed on the substrate,
wherein the low-refractive index layer comprises;
a first binder containing a photopolymerized product of a mixture of
(A) one or both of a side-chain reactive-type photopolymerizable fluoropolymer and a photopolymerizable fluorine-containing monomer represented by Formula (8)
Z¹-CF₂O-(CF₂CF₂O)_{d}-(CF₂O)ₑ-CF₂-Z² (8)
and
(B)a siloxane compound represented by Formula (1): 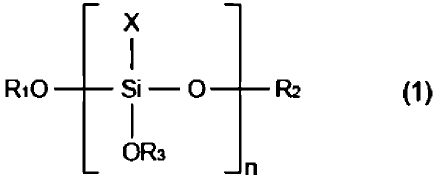
wherein, in Formula (1), R₁ to R₃ are each independently a linear or branched C1-C10 alkyl group; X is at least one selected from a photoreactive group, an alkyl group, a phenyl group, an amino group, an isocyanate group, a vinyl group, a mercapto group, and a glycidoxy group and comprises at least one photoreactive group; and n is an integer of 1 to 20;
and wherein in Formula (8), Z¹ and Z² are identical to or different from each other and are each independently an organic group having a urethane backbone and an acryloyl or methacryloyl group at a terminal; d is an integer of 0 or greater; and e is an integer of 1 or greater;
hollow silica particles distributed in the first binder; and
a photopolymerized product of a one-end reactive-type photopolymerizable fluoropolymer, and a modified silicone, which are mainly distributed in a surface side; and wherein the modified silicone is at least one selected from Formulae (3) to (5): 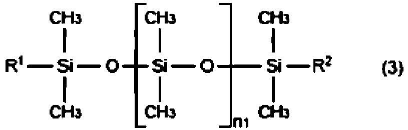 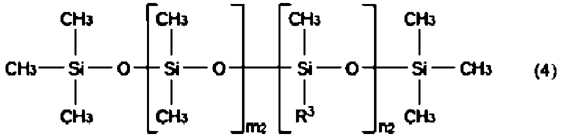 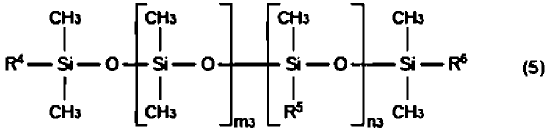 wherein, in Formulae (3) to (5), R¹ to R⁶ are each independently an organic group having one selected from an amino group, a hydroxyl group, an isocyanate group, a vinyl group, a mercapto group, a glycidoxy group, an acryloyl group, and a methacryloyl group, at a terminal; and m₂, m₃, n₁, n₂, and n₃ are each independently an integer of 1 or greater.

2. The optical member of claim 1, wherein pentaerythritol triacrylate represented by Formula (2) is used in addition to the siloxane compound:

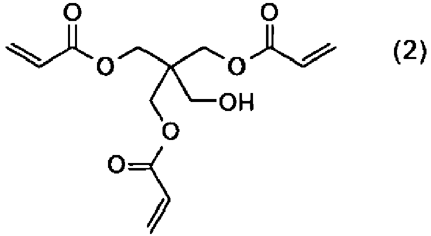

3. The optical member of claim 1, wherein the side-chain reactive-type photopolymerizable fluoropolymer is represented by Formulae (6) and (7): 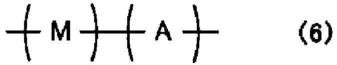 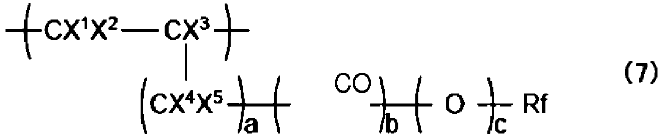
wherein, in Formula (6), structural unit M is a structural unit that is derived from a fluorine-containing ethylenic monomer represented by Formula (7); structural unit A is a structural unit that is derived from a monomer copolymerizable with a fluorine-containing ethylenic monomer represented by Formula (7); when the total side-chain reactive-type photopolymerizable fluoropolymer is 100 mol%, an amount of the structural unit M is in a range of 0.1 mol% to 100 mol%, an amount of the structural unit A is in a range of greater than 0 mol% to 99.9 mol% or less, and a number average molecular weight is in a range of 30,000 to 1,000,000; and
in Formula (7), X¹ is H or F; X² is H or F; X³ is H, F, CH₃, or CF₃; X⁴ is H, F, or CF₃; X⁵ is H, F, or CF₃; Rf is an organic group having 1 or greater to 3 or less Y¹, where Y¹ is a monovalent organic group having a carbon number in a range of 2 to 10 and an ethylenic carbon-carbon double bond at a terminal, bonded to a fluorine-containing alkyl group, wherein the fluorine-containing alkyl group has a fluorine-containing alkyl group having a carbon number in a range of 1 to 40 or an ether bond having a carbon number in a range of 2 to 100; a is 0, 1, 2, or 3; b is 0 or 1; and c is 0 or 1.

4. The optical member of claim 1, wherein the one-end reactive-type photopolymerizable fluoropolymer is represented by Formula (9), (10) or (11): 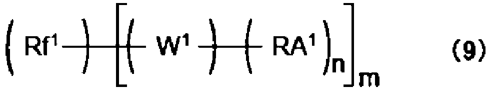 Rf²-(OD¹)ᵣ-O(D²)_{q}-O-(CF₂)-RA² (10) 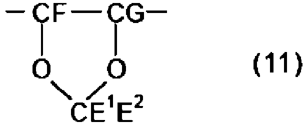
wherein, in Formula (9), Rf¹ denotes a (per)fluoroalkyl group or a (per)fluoropolyether group; W¹ denotes a linking group; RA¹ denotes a functional group having a polymerizable unsaturated group; n is 1, 2, or 3; and m is 1, 2, or 3;
in Formula (10), Rf² is a (per)fluoroalkyl group or a (per)fluoropolyether group; RA² is a reaction site at which polymerization occurs; D¹ is CF₂-CF₂; D² is a compound having a cyclic structure represented by Formula (11); and r and q are each independently an integer of 1 or greater; and
in Formula (11), E¹ is F or CF₂; E² is F or CF₂; and G is F or a perfluoroalkyl group having a carbon number in a range of 1 to 5.

5. The optical member of claim 4, wherein RA² is represented by Formula (12): 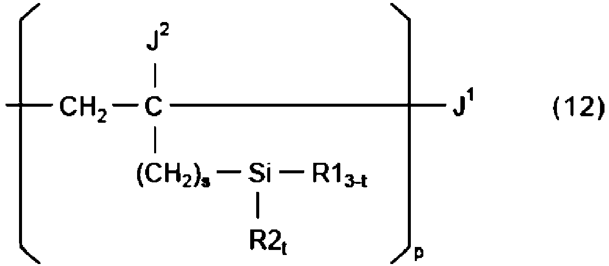 wherein, in Formula (12), J¹ is H; J² is H or a low alkyl group having a carbon number in a range of 1 to 3; R1 is a hydrolytic group; R2 is an acryloyl group or a methacryloyl group; s and p are each independently an integer of 1 or greater; and t is 1 or 2.

6. The optical member of claim 1, wherein the hollow silica particles have a plurality of maximum values in a frequency curve of particle diameters representing particle size distribution of the hollow silica particles, a photopolymerizable functional group and a hydroxyl group on a surface and a median particle diameter in a range of 10 nm to 100 nm, and a refractive index of the hollow silica particles themselves is in a range of 1.10 to 1.40.

7. The optical member of claim 1, wherein a hard coat layer comprising a second binder which is prepared by photopolymerizing a monomer having a photopolymerizable functional group and metal oxide particles distributed in the second binder, is disposed between the substrate and the low-refractive index layer, preferably the monomer having a photopolymerizable functional group comprises a first monomer represented by Formula (13) and optionally a second monomer represented by Formula (14): 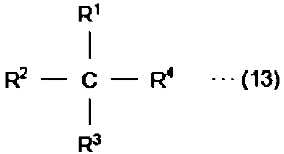 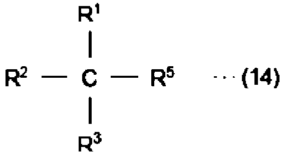 wherein, in Formula (13), R¹ to R⁴ each independently denote a photopolymerizable functional group not comprising a hydroxyl group; and
in Formula (14), R¹ to R³ each independently denote a photopolymerizable functional group not comprising a hydroxyl group; and R⁵ denotes a functional group having a hydroxyl group at a terminal.

8. The optical member of claim 7, wherein the second binder comprises:
a multi-branched monomer having a photopolymerizable functional group;
a multi-branched oligomer having a photopolymerizable functional group;
a combination thereof; and
a photopolymerized product of the monomer having a photopolymerizable functional group,
wherein the multi-branched monomer having a photopolymerizable functional group is bonded to the photopolymerizable functional group at a branch point of a second or higher generation or wherein the second binder is a photopolymerized product of the first monomer and the second monomer at a weight ratio in a range of 99:1 to 90:10.

9. The optical member of claim 7, wherein distribution of the metal oxide particles in the second binder is localized to a side of the substrate.

10. A display device comprising:
a display means displaying an image; and
a low-refractive index layer located on a surface of the display means,
wherein the low-refractive index layer comprises:
a first binder as defined in clam 1;
hollow silica particles distributed in the first binder; and
a photopolymerized product of a one-end reactive-type photopolymerizable fluoropolymer and a modified silicone as defined in claim 1, which are mainly distributed in a surface side,
wherein a hard coat layer comprising a second binder which is prepared by photopolymerizing a monomer having a photopolymerizable functional group and metal oxide particles distributed in the second binder, is disposed between the display means and the low-refractive index layer.

## Patentansprüche

1. Optisches Element, das Folgendes umfasst:
ein Substrat; und
eine auf dem Substrat gebildete Schicht mit niedrigem Brechungsindex, wobei die Schicht mit niedrigem Brechungsindex Folgendes umfasst:
ein erstes Bindemittel, das ein photopolymerisiertes Produkt einer Mischung aus
(A) einem seitenkettenreaktiven photopolymerisierbaren Fluorpolymer und/oder einem photopolymerisierbaren fluorhaltigen Monomer, dargestellt durch Formel (8)
**Z¹-CF₂O-(CF₂CF₂O)_{d}-(CF₂O)ₑ-CF₂-Z²** **(8)**
und
(B) einer Siloxanverbindung, dargestellt durch Formel (1): 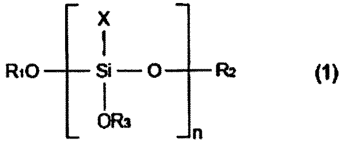
enthält, wobei in Formel (1) R₁ bis R₃ jeweils unabhängig voneinander eine lineare oder verzweigte C1-C10-Alkylgruppe sind; X mindestens eine Gruppe ausgewählt aus einer photoreaktiven Gruppe, einer Alkylgruppe, einer Phenylgruppe, einer Aminogruppe, einer Isocyanatgruppe, einer Vinylgruppe, einer Mercaptogruppe und einer Glycidoxygruppe ist und mindestens eine photoreaktive Gruppe umfasst; und n eine ganze Zahl von 1 bis 20 ist;
und wobei in Formel (8) Z¹ und Z² gleich oder unterschiedlich und jeweils unabhängig voneinander eine organische Gruppe mit einem Urethan-Grundgerüst und einer Acryloyl- oder Methacryloylgruppe an einem Ende sind; d eine ganze Zahl von 0 oder größer ist; und e eine ganze Zahl von 1 oder größer ist;
hohle Siliciumdioxidpartikel, die im ersten Bindemittel verteilt sind; und
ein photopolymerisiertes Produkt aus einem einseitig reaktiven, photopolymerisierbaren Fluorpolymer und einem modifizierten Silikon, die hauptsächlich in einer Oberflächenseite verteilt sind; und wobei das modifizierte Silikon mindestens ein aus den Formeln (3) bis (5) ausgewähltes ist: 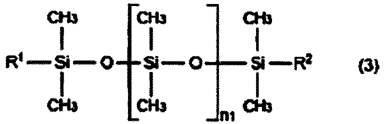 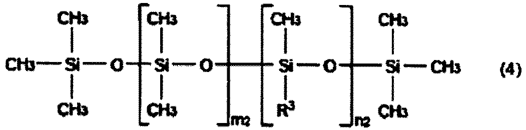 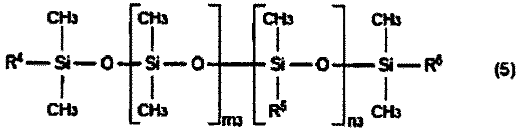 wobei in Formel (3) bis (5) R¹ bis R⁶ jeweils unabhängig voneinander eine organische Gruppe mit einer Gruppe ausgewählt aus einer Aminogruppe, einer Hydroxylgruppe, einer Isocyanatgruppe, einer Vinylgruppe, einer Mercaptogruppe, einer Glycidoxygruppe, einer Acryloylgruppe und einer Methacryloylgruppe an einem Ende sind; und m₂, m₃, n₁, n₂ und n₃ jeweils unabhängig voneinander eine ganze Zahl von 1 oder größer sind.

2. Optisches Element nach Anspruch 1, wobei Pentaerythritoltriacrylat, dargestellt durch Formel (2), zusätzlich zur Siloxanverbindung verwendet wird:

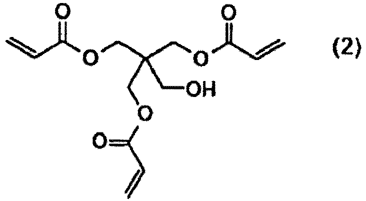

3. Optisches Element nach Anspruch 1, wobei das seitenkettenreaktive photopolymerisierbare Fluorpolymer durch Formel (6) und (7) dargestellt wird: 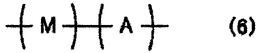 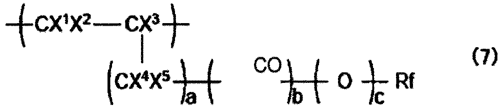
wobei in Formel (6) Struktureinheit M eine Struktureinheit ist, die von einem durch Formel (7) dargestellten fluorhaltigen ethylenischen Monomer abgeleitet ist; Struktureinheit A eine Struktureinheit ist, die von einem Monomer abgeleitet ist, das mit einem durch Formel (7) dargestellten fluorhaltigen ethylenischen Monomer copolymerisierbar ist; wenn das gesamte seitenkettenreaktive photopolymerisierbare Fluorpolymer 100 Mol-% beträgt, eine Menge von Struktureinheit M in einem Bereich von 0,1 Mol-% bis 100 Mol-% liegt, eine Menge von Struktureinheit A in einem Bereich von mehr als 0 Mol-% bis 99,9 Mol-% oder weniger liegt und ein zahlengemitteltes Molekulargewicht in einem Bereich von 30.000 bis 1.000.000 liegt; und
in Formel (7) X¹ H oder F ist; X² H oder F ist; X³ H, F, CH₃ oder CF₃ ist; X⁴ H, F oder CF₃ ist; X⁵ H, F oder CF₃ ist; Rf eine organische Gruppe mit 1 oder mehr bis 3 oder weniger an Y¹ ist, wobei Y¹ eine monovalente organische Gruppe mit einer Kohlenstoffzahl in einem Bereich von 2 bis 10 und einer ethylenischen Kohlenstoff-Kohlenstoff-Doppelbindung an einem Ende ist, die an eine fluorhaltige Alkylgruppe gebunden ist, wobei die fluorhaltige Alkylgruppe eine fluorhaltige Alkylgruppe mit einer Kohlenstoffzahl in einem Bereich von 1 bis 40 oder eine Etherbindung mit einer Kohlenstoffzahl in einem Bereich von 2 bis 100 hat; a 0, 1, 2 oder 3 ist; b 0 oder 1 ist; und c 0 oder 1 ist.

4. Optisches Element nach Anspruch 1, wobei das einseitig reaktive photopolymerisierbare Fluorpolymer durch Formel (9), (10) oder (11) dargestellt wird: 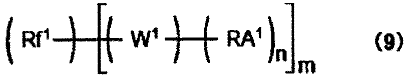
**Rf²-(OD¹)ᵣ-O(D²)_{q}-O-(CF₂)-RA²** **(10)** 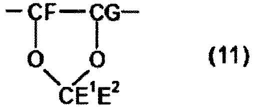
wobei in Formel (9) Rf¹ eine (Per)fluoralkylgruppe oder eine (Per)fluorpolyethergruppe bezeichnet; W¹ eine Verknüpfungsgruppe bezeichnet; RA¹ eine funktionelle Gruppe mit einer polymerisierbaren ungesättigten Gruppe bezeichnet; n 1, 2 oder 3 ist; und m 1, 2 oder 3 ist;
in Formel (10) Rf² eine (Per)fluoralkylgruppe oder eine (Per)fluorpolyethergruppe ist; RA² eine Reaktionsstelle ist, an der Polymerisation stattfindet; D¹ CF₂-CF₂ ist; D² eine Verbindung mit einer durch Formel (11) dargestellten cyclischen Struktur ist; und r und q jeweils unabhängig voneinander eine ganze Zahl von 1 oder größer sind; und
in Formel (11) E¹ F oder CF₂ ist; E² F oder CF₂ ist; und G F oder eine Perfluoralkylgruppe mit einer Kohlenstoffzahl in einem Bereich von 1 bis 5 ist.

5. Optisches Element nach Anspruch 4, wobei RA² durch Formel (12) dargestellt wird: 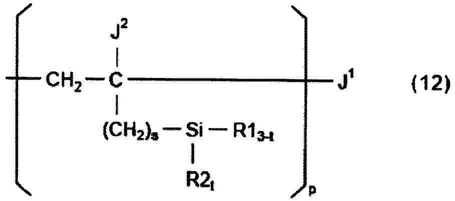 wobei in Formel (12) J¹ H ist; J² H oder eine Niederalkylgruppe mit einer Kohlenstoffzahl in einem Bereich von 1 bis 3 ist; R1 eine hydrolytische Gruppe ist; R2 eine Acryloylgruppe oder eine Methacryloylgruppe ist; s und p jeweils unabhängig voneinander eine ganze Zahl von 1 oder größer sind; und t 1 oder 2 ist.

6. Optisches Element nach Anspruch 1, wobei die hohlen Siliciumdioxidpartikel mehrere Maximalwerte in einer Frequenzkurve von Partikeldurchmessern, die die Partikelgrößenverteilung der hohlen Siliciumdioxidpartikel darstellen, eine photopolymerisierbare funktionelle Gruppe und eine Hydroxylgruppe auf einer Oberfläche und einen mittleren Partikeldurchmesser in einem Bereich von 10 nm bis 100 nm aufweisen, und ein Brechungsindex der hohlen Siliciumdioxidpartikel selbst in einem Bereich von 1,10 bis 1,40 liegt.

7. Optisches Element nach Anspruch 1, wobei zwischen dem Substrat und der Schicht mit niedrigem Brechungsindex eine harte Überzugsschicht angeordnet ist, die ein zweites Bindemittel, das durch Photopolymerisation eines Monomers mit einer photopolymerisierbaren funktionellen Gruppe hergestellt wird, und im zweiten Bindemittel verteilte Metalloxidpartikel umfasst, wobei das Monomer mit einer photopolymerisierbaren funktionellen Gruppe vorzugsweise ein durch Formel (13) dargestelltes erstes Monomer und gegebenenfalls ein durch Formel (14) dargestelltes zweites Monomer umfasst: 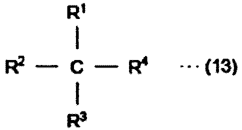 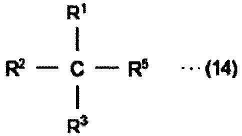
wobei in Formel (13) R¹ bis R⁴ jeweils unabhängig voneinander eine photopolymerisierbare funktionelle Gruppe bezeichnen, die keine Hydroxylgruppe umfasst; und
in Formel (14) R¹ bis R³ jeweils unabhängig voneinander eine photopolymerisierbare funktionelle Gruppe bezeichnen, die keine Hydroxylgruppe umfasst; und R⁵ eine funktionelle Gruppe bezeichnet, die eine Hydroxylgruppe an einem Ende aufweist.

8. Optisches Element nach Anspruch 7, wobei das zweite Bindemittel Folgendes umfasst:
ein mehrfach verzweigtes Monomer mit einer photopolymerisierbaren funktionellen Gruppe;
ein mehrfach verzweigtes Oligomer mit einer photopolymerisierbaren funktionellen Gruppe;
eine Kombination davon; und
ein photopolymerisiertes Produkt des Monomers mit einer photopolymerisierbaren funktionellen Gruppe,
wobei das mehrfach verzweigte Monomer mit einer photopolymerisierbaren funktionellen Gruppe an einem Verzweigungspunkt einer zweiten oder höheren Generation an die photopolymerisierbare funktionelle Gruppe gebunden ist oder wobei das zweite Bindemittel ein photopolymerisiertes Produkt des ersten Monomers und des zweiten Monomers in einem Gewichtsverhältnis in einem Bereich von 99:1 bis 90:10 ist.

9. Optisches Element nach Anspruch 7, wobei die Verteilung der Metalloxidpartikel im zweiten Bindemittel auf eine Seite des Substrats lokalisiert ist.

10. Anzeigegerät, das Folgendes umfasst:
ein Anzeigemittel, das ein Bild anzeigt; und
eine Schicht mit niedrigem Brechungsindex, die auf einer Oberfläche des Anzeigemittels angeordnet ist, wobei die Schicht mit niedrigem Brechungsindex Folgendes umfasst:
ein erstes Bindemittel wie in Anspruch 1 definiert;
hohle Siliziumdioxidpartikel, die im ersten Bindemittel verteilt sind; und
ein photopolymerisiertes Produkt aus einem einseitig reaktiven photopolymerisierbaren Fluorpolymer und einem modifizierten Silikon wie in Anspruch 1 definiert, die hauptsächlich in einer Oberflächenseite verteilt sind,
wobei eine harte Überzugsschicht, die ein zweites Bindemittel, das durch Photopolymerisation eines Monomers mit einer photopolymerisierbaren funktionellen Gruppe hergestellt ist, und im zweiten Bindemittel verteilte Metalloxidpartikel umfasst, zwischen dem Anzeigemittel und der Schicht mit niedrigem Brechungsindex angeordnet ist.

## Revendications

1. Élément optique comprenant :
un substrat ; et
une couche à faible indice de réfraction formée sur le substrat,
dans lequel la couche à faible indice de réfraction comprend :
un premier liant contenant un produit photopolymérisé à partir d'un mélange de
(A) un ou les deux parmi un fluoropolymère photopolymérisable du type réactif sur une chaîne latérale et un monomère photopolymérisable contenant du fluor représenté par la formule (8)
**Z¹-CF₂O-(CF₂CF₂O)_{d}-(CF₂O)ₑ-CF₂-Z²** **(8)**
et
(B) un composé de siloxane représenté par la formule (1) : 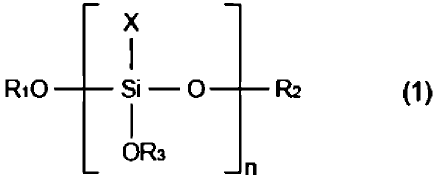
dans lequel, dans la formule (1), R₁ à R₃ sont chacun indépendamment un groupe alkyle C1-C10 linéaire ou ramifié ; X est au moins un groupe choisi parmi un groupe photoréactif, un groupe alkyle, un groupe phényle, un groupe amino, un groupe isocyanate, un groupe vinyle, un groupe mercapto et un groupe glycidoxy et comprend au moins un groupe photoréactif ; et n est un nombre entier valant de 1 à 20 ;
et dans lequel, dans la formule (8), Z¹ et Z² sont identiques ou différents l'un de de l'autre et sont chacun indépendamment un groupe organique ayant un squelette uréthane et un groupe acryloyle ou méthacryloyle à une terminaison ; d est un nombre entier égal ou supérieur à 0 ; et e est un nombre entier égal ou supérieur à 1 ;
des particules de silice creuses distribuées dans le premier liant ; et
un produit photopolymérisé à partir d'un fluoropolymère photopolymérisable du type réactif à une seule extrémité et d'un silicone modifié, qui sont principalement distribués dans un côté de la surface ; et dans lequel le silicone modifié est l'un au moins choisi parmi les formules (3) à (5) : 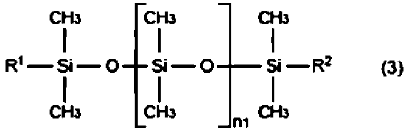 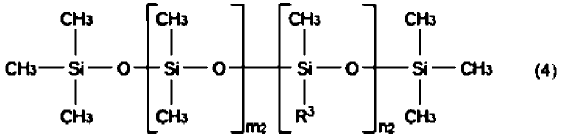 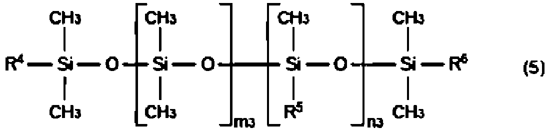 dans lequel, dans les formules (3) à (5), R¹ à R⁶ sont chacun indépendamment un groupe organique ayant un groupe choisi parmi un groupe amino, un groupe hydroxyle, un groupe isocyanate, un groupe vinyle, un groupe mercapto, un groupe glycidoxy, un groupe acryloyle et un groupe méthacryloyle à une terminaison ; et m₂, m₃, n₁, n₂, et n₃ sont chacun indépendamment un nombre entier égal ou supérieur à 1.

2. Élément optique selon la revendication 1, dans lequel du triacrylate de pentaérythritol représenté par la formule (2) est utilisé en plus du composé de siloxane :

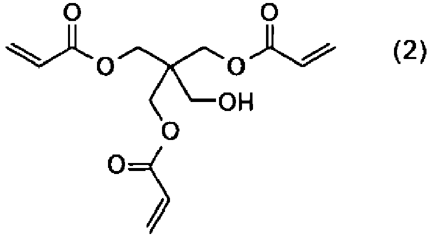

3. Élément optique selon la revendication 1, dans lequel le fluoropolymère photopolymérisable du type réactif sur une chaîne latérale est représenté par les formules (6) et (7) : 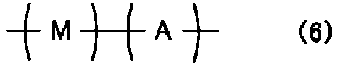 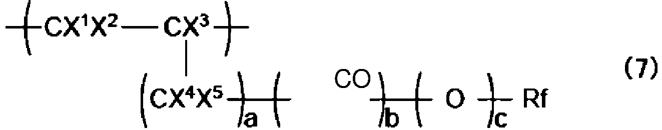
dans lequel, dans la formule (6), l'unité structurelle M est une unité structurelle qui est dérivée d'un monomère éthylénique contenant du fluor représenté par la formule (7) ; l'unité structurelle A est une unité structurelle qui est dérivée d'un monomère copolymérisable avec un monomère éthylénique contenant du fluor représenté par la formule (7) ; lorsque le total du fluoropolymère photopolymérisable du type réactif sur une chaîne latérale est égal à 100 % en moles, une quantité de l'unité structurelle M est dans une plage de 0,1 % en moles à 100 % en moles, une quantité de l'unité structurelle A est dans une plage de plus de 0 % en moles à 99,9 % en moles ou moins, et une masse moléculaire moyenne en nombre est dans une plage de 30 000 à 1 000 000 ; et
dans la formule (7), X¹ est H ou F ; X² est H ou F ; X³ est H, F, CH₃ ou CF₃ ; X⁴ est H, F, ou CF₃ ; X⁵ est H, F, ou CF₃ ; Rf est un groupe organique ayant 1 ou plus de 1 Y¹ jusqu'à 3 ou moins de 3 Y¹, où Y¹ est un groupe organique monovalent ayant un nombre de carbones dans une plage de 2 à 10 et une double liaison carbone-carbone éthylénique à une terminaison, lié à un groupe alkyle contenant du fluor, dans lequel le groupe alkyle contenant du fluor a un groupe alkyle contenant du fluor ayant un nombre de carbones dans une plage de 1 à 40 ou une liaison éther ayant un nombre de carbones dans une plage de 2 à 100 ; a vaut 0, 1, 2 ou 3 ; b vaut 0 ou 1 ; et c vaut 0 ou 1.

4. Élément optique selon la revendication 1, dans lequel le fluoropolymère photopolymérisable du type réactif à une seule extrémité est représenté par la formule (9), (10) ou (11) : 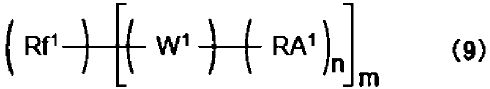
**Rf²-(OD¹)ᵣ-O(D²)_{q}-O-(CF₂)-RA²** **(10)** 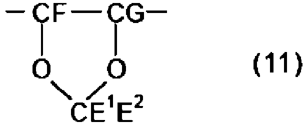
dans lequel, dans la formule (9), Rf¹ désigne un groupe (per)fluoroalkyle ou un groupe (per)fluoropolyéther ; W¹ désigne un groupe liant ; RA¹ désigne un groupe fonctionnel ayant un groupe insaturé polymérisable ; n vaut 1, 2 ou 3 ; et m vaut 1, 2 ou 3 ;
dans la formule (10), Rf² est un groupe (per)fluoroalkyle ou un groupe (per)fluoropolyéther ; RA² est un site de réaction auquel la polymérisation a lieu ; D¹ est CF₂-CF₂ ; D² est un composé ayant une structure cyclique représentée par la formule (11) ; et r et q sont chacun indépendamment un nombre entier égal ou supérieur à 1 ; et
dans la formule (11), E¹ est F ou CF₂ ; E² est F ou CF₂ ; et G est F ou un groupe perfluoroalkyle ayant un nombre de carbones dans une plage de 1 à 5.

5. Élément optique selon la revendication 4, dans lequel RA² est représenté par la formule (12) : 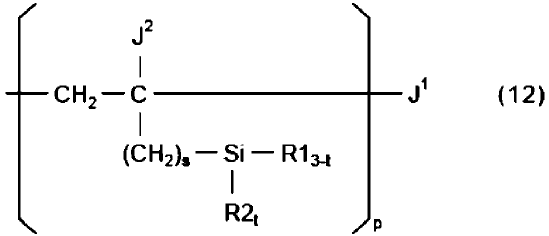 dans lequel, dans la formule (12), J¹ est H ; J² est H ou un groupe alkyle inférieur ayant un nombre de carbones dans une plage de 1 à 3 ; R1 est un groupe hydrolytique ; R2 est un groupe acryloyle ou un groupe méthacryloyle ; s et p sont chacun indépendamment un nombre entier égal ou supérieur à 1 ; et t vaut 1 ou 2.

6. Élément optique selon la revendication 1, dans lequel les particules de silice creuses ont une pluralité de valeurs maximales dans une courbe de fréquence des diamètres de particules représentant la distribution de la taille des particules de silice creuses, un groupe fonctionnel photopolymérisable et un groupe hydroxyle sur une surface et un diamètre de particule médian dans une plage de 10 nm à 100 nm, et un indice de réfraction des particules de silice creuses elles-mêmes est dans une plage de 1,10 à 1,40.

7. Élément optique selon la revendication 1, dans lequel une couche de revêtement dur comprenant un deuxième liant, qui est préparé en photopolymérisant un monomère ayant un groupe fonctionnel photopolymérisable et des particules d'oxyde métallique distribuées dans le deuxième liant, est disposée entre le substrat et la couche à faible indice de réfraction, de préférence le monomère ayant un groupe fonctionnel photopolymérisable comprend un premier monomère représenté par la formule (13) et facultativement un deuxième monomère représenté par la formule (14) : 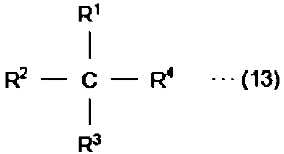 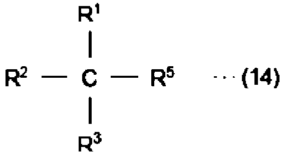
dans lequel, dans la formule (13), R¹ à R⁴ désignent chacun indépendamment un groupe fonctionnel photopolymérisable ne comprenant pas de groupe hydroxyle ; et
dans la formule (14), R¹ à R³ désignent chacun indépendamment un groupe fonctionnel photopolymérisable ne comprenant pas de groupe hydroxyle ; et R⁵ désigne un groupe fonctionnel ayant un groupe hydroxyle à une terminaison.

8. Élément optique selon la revendication 7, dans lequel le deuxième liant comprend :
un monomère multi-ramifié ayant un groupe fonctionnel photopolymérisable ;
un oligomère multi-ramifié ayant un groupe fonctionnel photopolymérisable ;
une combinaison de ceux-ci ; et
un produit photopolymérisé du monomère ayant un groupe fonctionnel photopolymérisable,
dans lequel le monomère multi-ramifié ayant un groupe fonctionnel photopolymérisable est lié au groupe fonctionnel photopolymérisable à un point de ramification d'une deuxième génération ou supérieure, ou dans lequel le deuxième liant est un produit photopolymérisé du premier monomère et du deuxième monomère à un ratio en poids dans une plage de 99:1 à 90:10.

9. Élément optique selon la revendication 7, dans lequel la distribution des particules d'oxyde métallique dans le deuxième liant est localisée sur un côté du substrat.

10. Dispositif d'affichage comprenant :
un moyen d'affichage affichant une image ; et
une couche à faible indice de réfraction située sur une surface du moyen d'affichage,
dans lequel la couche à faible indice de réfraction comprend :
un premier liant tel que défini dans la revendication 1 ;
des particules de silice creuses distribuées dans le premier liant ; et
un produit photopolymérisé d'un fluoropolymère photopolymérisable du type réactif à une seule extrémité et un silicone modifié tel que défini dans la revendication 1, qui sont principalement distribués dans un côté de la surface,
dans lequel une couche de revêtement dur, comprenant un deuxième liant qui est préparé en photopolymérisant un monomère ayant un groupe fonctionnel photopolymérisable et des particules d'oxyde métallique distribuées dans le deuxième liant, est disposée entre le moyen d'affichage et la couche à faible indice de réfraction.
